# EUROPEAN PATENT SPECIFICATION

(11) **EP 3 780 808 B1**
(45) Date of publication and mention of the grant of the patent: **05.11.2025**
(21) Application number: 19776327.9
(22) Date of filing: 01.03.2019
(51) Int. Cl.: H04L 5/00

(54) **TERMINAL DEVICE AND COMMUNICATION METHOD**
ENDGERÄTEVORRICHTUNG UND KOMMUNIKATIONSVERFAHREN
DISPOSITIF TERMINAL ET PROCÉDÉ DE COMMUNICATION

(30) Priority: 26.03.2018 JP 2018058037
(43) Date of publication of application: 17.02.2021
(73) Proprietor: Sharp Kabushiki Kaisha, Osaka 590-8522 (JP)
(72) Inventor: NAKASHIMA, Daiichiroh, Sakai City, Osaka 590-8522 (JP); YOSHIMURA, Tomoki, Sakai City, Osaka 590-8522 (JP); OHUCHI, Wataru, Sakai City, Osaka 590-8522 (JP)
(74) Representative: Müller Hoffmann & Partner
(86) International application number: PCT/JP2019/008164
(87) International publication number: WO 2019/187989

(56) References cited:
- US-A1- 2012 063 401
- HUAWEI ET AL: "CORESET configuration and search space design", vol. RAN WG1, no. Reno, USA; 20171127 - 20171201, 18 November 2017 (2017-11-18), XP051369296, Retrieved from the Internet <URL:http://www.3gpp.org/ftp/tsg%5Fran/WG1%5FRL1/TSGR1%5F91/Docs/> [retrieved on 20171118]
- QUALCOMM INCORPORATED: "TxOP frame structure for NR unlicensed", 3GPP TSG RAN WG1 #92 R1- 1802866, 2 March 2018 (2018-03-02), XP051398279
- QUALCOMM INCORPORATED: "Potential solutions and techniques for NR unlicensed", 3GPP TSG RAN WG1 #92 R1-1802865, 2 March 2018 (2018-03-02), XP051398278

## Description

### Technical Field

One aspect of the present invention relates to a terminal apparatus, a base station apparatus, and a communication method.

This application claims priority based on JP 2018-058037 filed on March 26, 2018.

### Background Art

In the 3rd Generation Partnership Project (3GPP), a radio access method and a radio network for cellular mobile communications (hereinafter referred to as "Long Term Evolution (LTE)" or "Evolved Universal Terrestrial Radio Access (EUTRA)") have been specified. In LTE, a base station apparatus is also referred to as an evolved NodeB (eNodeB), and a terminal apparatus is also referred to as User Equipment (UE). LTE is a cellular communication system in which multiple areas are deployed in a cell structure, with each of the multiple areas being covered by a base station apparatus. A single base station apparatus may manage multiple cells.

3GPP has been studying a next generation standard (New Radio or NR) (NPL 1) to make a proposal for International Mobile Telecommunication (IMT)-2020, a standard for a next-generation mobile communication system, standardized by the International Telecommunication Union (ITU). NR is required to satisfy requirements for three scenarios including enhanced Mobile BroadBand (eMBB), massive Machine Type Communication (mMTC), and Ultra Reliable and Low Latency Communication (URLLC) in a single technology framework.

A consideration has been made on the application of NR in an Unlicensed Spectrum (NPL 2). It is under study that NR supporting a 100 MHz wide band is applied to carriers in an unlicensed frequency band to achieve a data rate of several Gbps.

"CORESET configuration and search space design" by Huawei et al. (3GPP Draft; R1-1719387, 20171118 3rd Generation Partnership Project (3GPP), Mobile Competence Centre; 650, route des Lucioles; F-06921 Sophia-Antipolis Cedex; France) is related to CORESET configuration and search space design.

### Citation List

### Non Patent Literature

NPL 1: "New SID proposal: Study on New Radio Access Technology", RP-160671, NTT docomo, 3GPP TSG RAN Meeting #71, Goteborg, Sweden, 7th to 10th March, 2016.
NPL 2: "Revised SID on NR-based Access to Unlicensed Spectrum", RP-171601, Qualcomm Incorporated, 3GPP TSG RAN Meeting #77, Sapporo, Japan, 11th-14th September, 2017.

### Summary of Invention

### Technical Problem

In some countries in the world, Listen-Before-Talk (LBT) needs to be applied in unlicensed frequency bands. The mechanism for enabling transmission within a prescribed time length only in a case that carrier sense is performed prior to the start of transmission, and it is confirmed that the resource (channel) is not applied to other systems in the vicinity by carrier sense is LBT.

One aspect of the present invention applies NR while applying LBT in an unlicensed frequency band. One aspect of the present invention provides a terminal apparatus capable of efficiently performing communication, a communication method used for the terminal apparatus, a base station apparatus capable of efficiently performing communication, and a communication method used for the base station apparatus.

### Solution to Problem

This is achieved by the claimed subject-matter, which defines the present invention.

### Advantageous Effects of Invention

According to the present invention, the terminal apparatus can efficiently perform communication. The base station apparatus can efficiently perform communication.

### Brief Description of Drawings

FIG. 1 is a conceptual diagram of a radio communication system according to one aspect of the present embodiment.
FIG. 2 is an example illustrating a configuration of a radio frame, subframes, and slots according to one aspect of the present embodiment.
FIG. 3 is a diagram illustrating an example of a configuration of the slots and mini-slots according to one aspect of the present embodiment.
FIG. 4 is a diagram illustrating an example of mapping of control resource sets according to one aspect of the present embodiment.
FIG. 5 is a diagram illustrating an example of resource elements included in a slot according to one aspect of the present embodiment.
FIG. 6 is a diagram illustrating an example of a configuration of one REG according to one aspect of the present embodiment.
FIG. 7 is a diagram illustrating an example of a configuration of CCEs according to one aspect of the present embodiment.
FIG. 8 is a diagram illustrating an example of a relationship between the number of REGs constituting a REG group and a mapping method of the PDCCH candidate according to one aspect of the present embodiment.
FIG. 9 is a diagram illustrating an example of the mapping of the REGs constituting the CCE according to one aspect of the present embodiment.
FIG. 10 is a schematic block diagram illustrating a configuration of a terminal apparatus 1 according to the present embodiment.
FIG. 11 is a schematic block diagram illustrating a configuration of a base station apparatus 3 according to the present embodiment.
FIG. 12 is a diagram illustrating an example of a first initial connection procedure (4-step contention based RACH procedure) according to one aspect of the present embodiment.
FIG. 13 is a diagram illustrating an example of a first control resource set and a second control resource set configured to the terminal apparatus 1 according to one aspect of the present embodiment.
FIG. 14 is a diagram illustrating an example of a first control resource set and a second control resource set configured to the terminal apparatus 1 according to one aspect of the present embodiment.
FIG. 15 is a diagram illustrating an example of a first control resource set and a second control resource set configured to the terminal apparatus 1 according to one aspect of the present embodiment.
FIG. 16 is a diagram illustrating an example of PDCCH candidates monitored by the terminal apparatus 1 according to one aspect of the present embodiment.
FIG. 17 is a diagram illustrating an example of PDCCH candidates monitored by the terminal apparatus 1 according to one aspect of the present embodiment.

### Description of Embodiments

An embodiment of the present invention will be described below.

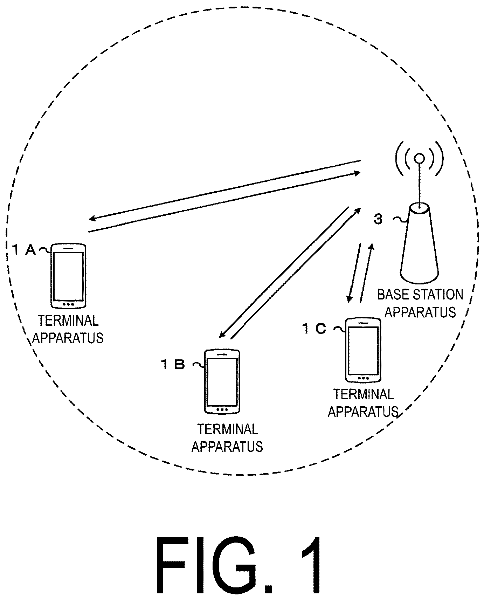

FIG. 1 is a conceptual diagram of a radio communication system according to one aspect of the present embodiment. In FIG. 1, the radio communication system includes terminal apparatuses 1A to 1C and a base station apparatus 3 (gNB). Hereinafter, the terminal apparatuses 1A to 1C are each also referred to as a terminal apparatus 1 (UE).

Hereinafter, various radio parameters related to communications between the terminal apparatus 1 and the base station apparatus 3 will be described. Here, at least some of the radio parameters (for example, Subcarrier Spacing (SCS)) are also referred to as Numerology. The radio parameters include at least some of the subcarrier spacing, a length of an OFDM symbol, a length of a subframe, a length of a slot, or a length of a mini-slot.

The subcarrier spacing used for the radio communications is one of the radio parameters for the communication method (for example, Orthogonal Frequency Division Multiplex (OFDM), Orthogonal Frequency Division Multiple Access (OFDMA), Single Carrier-Frequency Division Multiple Access (SC-FDMA), Discrete Fourier Transform-spread-OFDM (DFT-s-OFDM)) used for the radio communication between the terminal apparatus 1 and the base station apparatus 3. For example, the subcarrier spacing is 15 kHz, 30 kHz, 60 kHz, or 120 kHz.

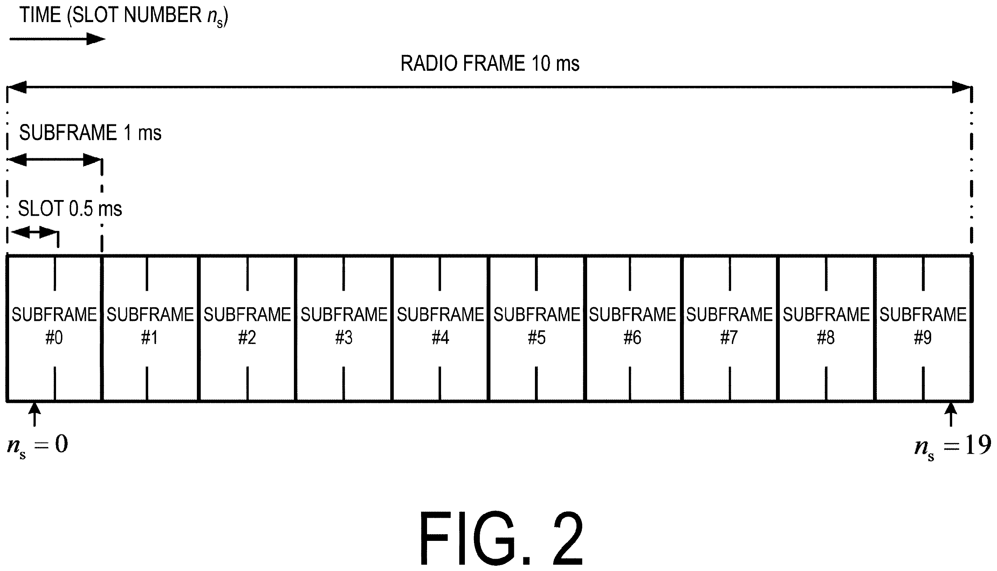

FIG. 2 is an example illustrating a configuration of a radio frame, subframes, and slots according to one aspect of the present embodiment. In the example illustrated in FIG. 2, a length of each slot is 0.5 ms, a length of each subframe is 1 ms, and a length of the radio frame is 10 ms. The slot may be a unit of resource allocation in the time domain. For example, the slot may be a unit for mapping of one transport block. For example, the transport block may be mapped to one slot. Here, the transport block may be a unit of data to be transmitted in a prescribed interval (for example, Transmission Time Interval (TTI)) defined in a higher layer (for example, Mediam Access Control (MAC), Radio Resource Control (RRC)).

For example, the length of the slot may be given according to the number of OFDM symbols. For example, the number of OFDM symbols may be 7 or 14. The length of the slot may be given based on at least a length of an OFDM symbol. The length of the OFDM symbol may differ based on at least the subcarrier spacing. The length of the OFDM symbol may be given based on at least the number of points of Fast Fourier Transform (FFT) used to generate the OFDM symbol. The length of the OFDM symbol may include a length of a Cyclic Prefix (CP) added to the OFDM symbol. Here, the OFDM symbol may be called a symbol. In a case that a communication scheme other than OFDM is used in communication between the terminal apparatus 1 and the base station apparatus 3 (e.g., in a case that SC-FDMA or DFT-s-OFDM is used, etc.), an SC-FDMA symbol and/or a DFT-s-OFDM symbol to be generated is also referred to as an OFDM symbol. Unless otherwise stated, OFDM includes SC-FDMA or DFT-s-OFDM.

For example, the length of the slot may be 0.125 ms, 0.25 ms, 0.5 ms, or 1 ms. For example, in the case that the subcarrier spacing is 15 kHz, the length of the slot may be 1 ms. For example, in the case that the subcarrier spacing is 30 kHz, the length of the slot may be 0.5 ms. For example, in the case that the subcarrier spacing is 120 kHz, the length of the slot may be 0.125 ms. For example, in the case that the subcarrier spacing is 15 kHz, the length of the slot may be 1 ms. For example, in the case that the length of the slot is 0.125 ms, one subframe may include eight slots. For example, in the case that the length of the slot is 0.25 ms, one subframe may include four slots. For example, in the case that the length of the slot is 0.5 ms, one subframe may include two slots. For example, in the case that the length of the slot is 1 ms, one subframe may include one slot.

The OFDM includes a multi-carrier communication scheme in which waveform shaping (Pulse Shape), PAPR reduction, out-of-band radiation reduction, or filtering, and/or phase processing (e.g., phase rotation, etc.) are applied. The multi-carrier communication scheme may be a communication scheme for generating/transmitting a signal in which multiple subcarriers are multiplexed.

The radio frame may be given according to the number of subframes. The number of subframes for the radio frame may be, for example, 10. The radio frame may be given according to the number of slots.

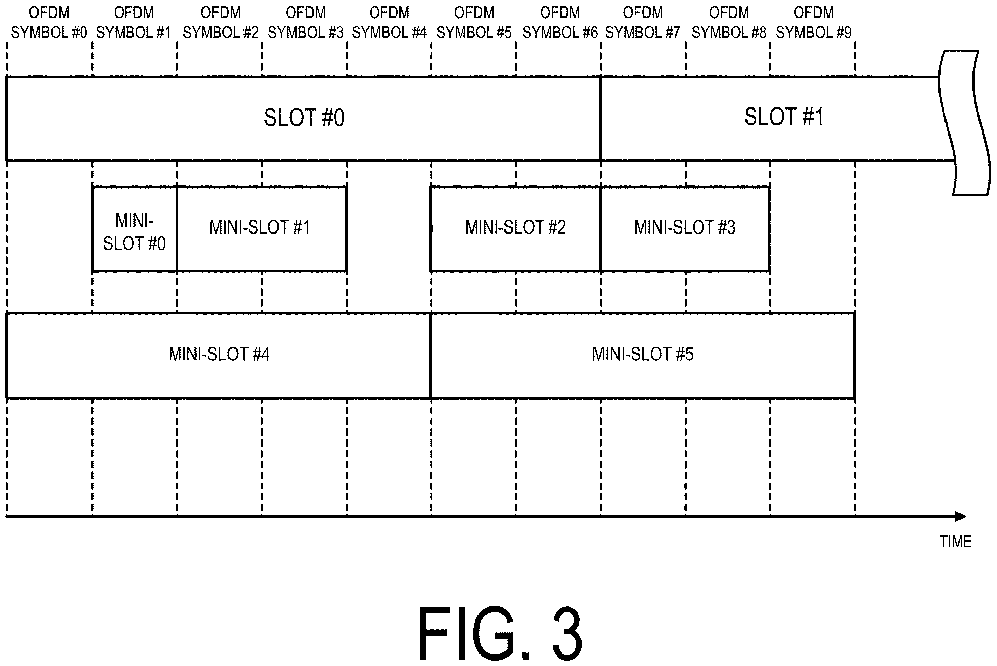

FIG. 3 is a diagram illustrating a configuration example of the slots and mini-slots according to one aspect of the present embodiment. In FIG. 3, the number of OFDM symbols constituting one slot is seven. A mini-slot may include one or more OFDM symbols smaller than the number of multiple OFDM symbols constituting a slot. The length of the mini-slot may be shorter than that of the slot. FIG. 3 illustrates a mini-slot #0 to a mini-slot #5 as an example of the configuration of the mini-slots. The mini-slot may include a single OFDM symbol, as indicated by the mini-slot #0. The mini-slot may include two OFDM symbols as indicated by the mini-slots #1 to #3. A gap (time interval) may be inserted between two mini-slots, as indicated by the mini-slot #1 and the mini-slot #2. The mini-slot may be configured so as to cross the boundary between the slots #0 and #1, as indicated by the mini-slot #5. In other words, the mini-slot may be configured so as to cross the boundary between the slots. Here, the mini-slot is also referred to as a sub-slot. The mini-slot is also referred to as short Transmission Time Interval (short TTI (sTTI)). In the following, the slot may be replaced by the mini-slot. The mini-slot may include the same number of OFDM symbols as that of the slot. The mini-slot may include a larger number of OFDMs than the number of multiple OFDM symbols constituting the slot. The length of the time domain of the mini-slot may be shorter than the length of the slot. The length of the time domain of the mini-slot may be shorter than the length of the subframe.

A physical channel and a physical signal according to various aspects of the present embodiment will be described below.

In FIG. 1, the following uplink physical channels are at least used for uplink radio communication from the terminal apparatus 1 to the base station apparatus 3. The uplink physical channels are used by a physical layer for transmission and/or reception of information output from a higher layer.
- Physical Uplink Control Channel (PUCCH)
- Physical Uplink Shared Channel (PUSCH)
- Physical Random Access Channel (PRACH)

The PUCCH is used to transmit and/or receive Uplink Control Information (UCI). The uplink control information includes Channel State Information (CSI) of a downlink channel, a Scheduling Request (SR) used to request a PUSCH (Uplink-Shared Channel (UL-SCH)) resource for initial transmission, and a Hybrid Automatic Repeat request ACKnowledgement (HARQ-ACK) for downlink data (Transport block (TB), Medium Access Control Protocol Data Unit (MAC PDU), Downlink-Shared Channel (DL-SCH), and Physical Downlink Shared Channel (PDSCH)). The HARQ-ACK indicates an acknowledgement (ACK) or a negative-acknowledgement (NACK). The HARQ-ACK is also referred to as HARQ feedback, HARQ information, HARQ control information, and an ACK/NACK.

The Channel State Information (CSI) includes at least a Channel Quality Indicator (CQI). The channel state information may include a Rank Indicator (RI). The channel state information may include a Precoder Matrix Indicator (PMI). The CQI is an indicator associated with channel quality (propagation strength), and the PMI is an indicator indicating a precoder. The RI is an indicator indicating a transmission rank (or the number of transmission layers).

The PUSCH is used to transmit and/or receive uplink data (TB, MAC PDU, UL-SCH, and PUSCH). The PUSCH may be used to transmit and/or receive a HARQ-ACK and/or channel state information along with the uplink data. The PUSCH may be used to transmit and/or receive only the channel state information or only the HARQ-ACK and the channel state information. The PUSCH may be used to transmit and/or receive a random access message 3.

The PRACH may be used to transmit and/or receive a random access preamble (random access message 1). The PRACH is used to indicate an initial connection establishment procedure, a handover procedure, a connection re-establishment procedure, synchronization (timing adjustment) for uplink data transmission, and a request for a PUSCH (UL-SCH) resource. The random access preamble may be used to notify the base station apparatus 3 of an index (random access preamble index) given by a higher layer of the terminal apparatus 1.

The random access preamble may be given by cyclic-shifting a Zadoff-Chu sequence corresponding to a physical root sequence index u. The Zadoff-Chu sequence may be generated based on the physical root sequence index u. In a single cell, multiple random access preambles may be defined. A random access preamble may be identified at least based on an index of the random access preamble. A different random access preamble corresponding to a different index of the random access preamble may correspond to a different combination of the physical root sequence index u and the cyclic shift. The physical root sequence index u and the cyclic shift may be given at least based on information included in system information. The physical root sequence index u may be an index for identifying a sequence included in the random access preamble. The random access preamble may be identified at least based on the physical root sequence index u.

In FIG. 1, the following uplink physical signal is used for uplink radio communication. The uplink physical signal may not be used for transmitting and/or receiving information output from a higher layer, but is used by the physical layer.

### - Uplink Reference Signal (UL RS)

According to the present embodiment, at least the following two types of uplink reference signal may be at least used.
- Demodulation Reference Signal (DMRS)
- Sounding Reference Signal (SRS)

The DMRS is associated with transmission and/or reception of the PUSCH and/or the PUCCH. The DMRS is multiplexed with the PUSCH or the PUCCH. The base station apparatus 3 uses the DMRS in order to perform channel compensation of the PUSCH or the PUCCH. Transmission of both of the PUSCH and the DMRS is hereinafter referred to simply as transmission of the PUSCH. Transmission of both of the PUCCH and the DMRS is hereinafter referred to simply as transmission of the PUCCH. Reception of both of the PUSCH and the DMRS is hereinafter referred to simply as reception of the PUSCH. Reception of both of the PUCCH and the DMRS is hereinafter referred to simply as reception of the PUCCH.

The SRS may not be associated with transmission and/or reception of the PUSCH or the PUCCH. The base station apparatus 3 may use the SRS for measuring a channel state. The SRS may be transmitted and/or received at the end of a subframe in an uplink slot or in a prescribed number of OFDM symbols from the end.

In FIG. 1, the following downlink physical channels are used for downlink radio communication from the base station apparatus 3 to the terminal apparatus 1. The downlink physical channels are used by a physical layer for transmission and/or reception of information output from a higher layer.
- Physical Broadcast Channel (PBCH)
- Physical Downlink Control Channel (PDCCH)
- Physical Downlink Shared Channel (PDSCH)

The PBCH is used for broadcasting a Master Information Block (MIB, BCH, or Broadcast Channel) that is commonly used by the terminal apparatuses 1. The PBCH may be transmitted at a prescribed transmission interval. For example, the PBCH may be transmitted at an interval of 80 ms. Contents of information included in the PBCH may be updated at every 80 ms. The PBCH may include 288 subcarriers. The PBCH may include 2, 3, or 4 OFDM symbols. The MIB may include information on an identifier (index) related to a synchronization signal. The MIB may include information indicating at least some of numbers of a slot, a subframe, and a radio frame in which a PBCH is transmitted.

The PDCCH (NR PDCCH) is used to transmit and/or receive Downlink Control Information (DCI). The downlink control information is also called a DCI format. The downlink control information may include at least either a downlink grant or an uplink grant. The downlink grant is also referred to as downlink assignment or downlink allocation. The downlink control information may include Unlicensed access common information. The Unlicensed access common information is control information related to access, transmission and/or reception, and the like in an unlicensed frequency band. The Unlicensed access common information may be information of a downlink subframe configuration (Subframe configuration for Unlicensed Access). The downlink subframe configuration indicates the position of the OFDM symbols occupied in a subframe in which the PDCCH including the information of the downlink subframe configuration is allocated, and/or the position of the OFDM symbols occupied in the next subframe of the subframe in which the PDCCH including the information of the downlink subframe configuration is allocated. A downlink physical channel or a downlink physical signal is transmitted and/or received in the occupied OFDM symbols. The Unlicensed access common information may be information of an uplink subframe configuration (UL duration and offset). The uplink subframe configuration indicates the position of the subframe at which the uplink subframes are started based on the subframe in which the PDCCH including the information of the uplink subframe configuration is allocated, and the number of subframes in the uplink subframe. The terminal apparatus 1 is not required to receive a downlink physical channel or a downlink physical signal in the subframe indicated by the information of the uplink subframe configuration.

For example, the downlink control information including a downlink grant or an uplink grant is transmitted and/or received in the PDCCH including a Cell-Radio Network Temporary Identifier (C-RNTI). For example, the Unlicensed access common information is transmitted and/or received on the PDCCH, including a Common Control-Radio Network Temporary Identifier (CC-RNTI).

A single downlink grant is at least used for scheduling of a single PDSCH in a single serving cell. The downlink grant is at least used for the scheduling of the PDSCH in the same slot as the slot in which the downlink grant is transmitted. The downlink grant may be used for scheduling of the PDSCH within a slot different from the slot in which the downlink grant has been transmitted.

A single uplink grant is at least used for scheduling of a single PUSCH in a single serving cell.

In the terminal apparatus 1, one or multiple control resource sets (CORESETs) may be configured to search for the PDCCH. The terminal apparatus 1 attempts to receive the PDCCH in the configured control resource set.

Details of the control resource set will be described later.

The PDSCH is used to transmit and/or receive downlink data (DL-SCH, PDSCH). The PDSCH is at least used to transmit and/or receive a random access message 2 (random access response). The PDSCH is at least used to transmit and/or receive system information including parameters used for initial access.

In FIG. 1, the following downlink physical signals are used for the downlink radio communication. The downlink physical signals may not be used for transmitting and/or receiving information output from a higher layer, but are used by the physical layer.
- Synchronization signal (SS)
- Downlink Reference Signal (DL RS)

The synchronization signal is used for the terminal apparatus 1 to establish synchronization in a frequency domain and a time domain in the downlink. The synchronization signal includes a Primary Synchronization Signal (PSS) and a Secondary Synchronization Signal (SSS).

The downlink reference signal is used for the terminal apparatus 1 to perform channel compensation on a downlink physical channel. The downlink reference signal is used for the terminal apparatus 1 to obtain the downlink channel state information.

According to the present embodiment, at least the following type of downlink reference signal is used.

### - Demodulation Reference Signal (DMRS)

The DMRS corresponds to transmission and/or reception of the PDCCH and/or the PDSCH. The DMRS is multiplexed with the PDCCH or the PDSCH. The terminal apparatuses 1 may use the DMRS corresponding to the PDCCH or the PDSCH in order to perform channel compensation of the PDCCH or the PDSCH. Hereinafter, transmission of both of the PDCCH and the DMRS corresponding to the PDCCH is simply referred to as transmission of the PDCCH. Hereinafter, reception of both of the PDCCH and the DMRS corresponding to the PDCCH is simply referred to as reception of the PDCCH. Hereinafter, transmission of both of the PDSCH and the DMRS corresponding to the PDSCH is simply referred to as transmission of the PDSCH. Hereinafter, reception of both of the PDSCH and the DMRS corresponding to the PDSCH is simply referred to as reception of the PDSCH.

The DMRS may be an RS individually configured for the terminal apparatus 1. The sequence of the DMRS may be given at least based on parameters individually configured for the terminal apparatus 1. The DMRS may be individually transmitted for the PDCCH and/or the PDSCH. The DMRS may be an RS commonly configured for multiple terminal apparatuses 1. The sequence of the DMRS may be given regardless of the parameter individually configured for the terminal apparatus 1. For example, the sequence of the DMRS may be given based on at least some of a slot number, a mini-slot number, and a cell identity (ID). The DMRS may be an RS to be transmitted regardless of whether or not the PDCCH and/or the PDSCH has been transmitted.

Downlink physical channels and downlink physical signals are collectively referred to as downlink signals. Uplink physical channels and uplink physical signals are collectively referred to as uplink signals. The downlink physical channels and the uplink physical channels are collectively referred to as physical channels. The downlink physical signals and the uplink physical signals are collectively referred to as physical signals.

The BCH, the UL-SCH, and the DL-SCH are transport channels. A channel used in a Medium Access Control (MAC) layer is referred to as a transport channel. A unit of the transport channel used in the MAC layer is also referred to as a transport block or a MAC PDU. A Hybrid Automatic Repeat reQuest (HARQ) is controlled for each transport block in the MAC layer. The transport block is a unit of data that the MAC layer delivers to the physical layer. In the physical layer, the transport block is mapped to a codeword, and a modulation process is performed for each codeword.

The base station apparatus 3 and the terminal apparatus 1 exchange (transmit and/or receive) a signal in the higher layer. For example, the base station apparatus 3 and the terminal apparatus 1 may transmit and/or receive Radio Resource Control (RRC) signaling (also referred to as a Radio Resource Control (RRC) message or Radio Resource Control (RRC) information) in an RRC layer. The base station apparatus 3 and the terminal apparatus 1 may transmit and/or receive, in the MAC layer, a MAC Control Element (CE). Here, the RRC signaling and/or the MAC CE is also referred to as higher layer signaling.

The PUSCH and the PDSCH are at least used to transmit and/or receive the RRC signaling and the MAC CE. Here, the RRC signaling transmitted from the base station apparatus 3 through the PDSCH may be signaling common to the multiple terminal apparatuses 1 in a cell. The signaling common to the multiple terminal apparatuses 1 in the cell is also referred to as common RRC signaling. The RRC signaling transmitted from the base station apparatus 3 through the PDSCH may be signaling dedicated to a certain terminal apparatus 1 (also referred to as dedicated signaling or UE specific signaling). The signaling dedicated to the terminal apparatus 1 is also referred to as dedicated RRC signaling. A cell-specific parameter may be transmitted by using the signaling common to the multiple terminal apparatuses 1 in the cell or the signaling dedicated to the certain terminal apparatus 1. A UE-specific parameter may be transmitted by using the signaling dedicated to the certain terminal apparatus 1. The PDSCH including the dedicated RRC signaling may be scheduled via the PDCCH in the control resource set. The PDSCH including the common RRC signaling may be scheduled via the PDCCH in the control resource set.

A Broadcast Control CHannel (BCCH), a Common Control CHannel (CCCH), and a Dedicated Control CHannel (DCCH) are logical channels. For example, the BCCH is a higher layer channel used to transmit and/or receive the MIB. The Common Control Channel (CCCH) is a higher layer channel used to transmit and/or receive information common to the multiple terminal apparatuses 1. Here, the CCCH is used for a terminal apparatus 1 that is not in an RRC connected state, for example. The Dedicated Control Channel (DCCH) is a channel of the higher layer used to transmit and/or receive individual control information (dedicated control information) to the terminal apparatus 1. Here, the DCCH is used for a terminal apparatus 1 that is in the RRC connected state, for example.

The BCCH in the logical channel may be mapped to the BCH, the DL-SCH, or the UL-SCH in the transport channel. The CCCH in the logical channel may be mapped to the DL-SCH or the UL-SCH in the transport channel. The DCCH in the logical channel may be mapped to the DL-SCH or the UL-SCH in the transport channel.

The UL-SCH in the transport channel is mapped to the PUSCH in the physical channel. The DL-SCH in the transport channel is mapped to the PDSCH in the physical channel. The BCH in the transport channel is mapped to the PBCH in the physical channel.

Hereinafter, the control resource set will be described.

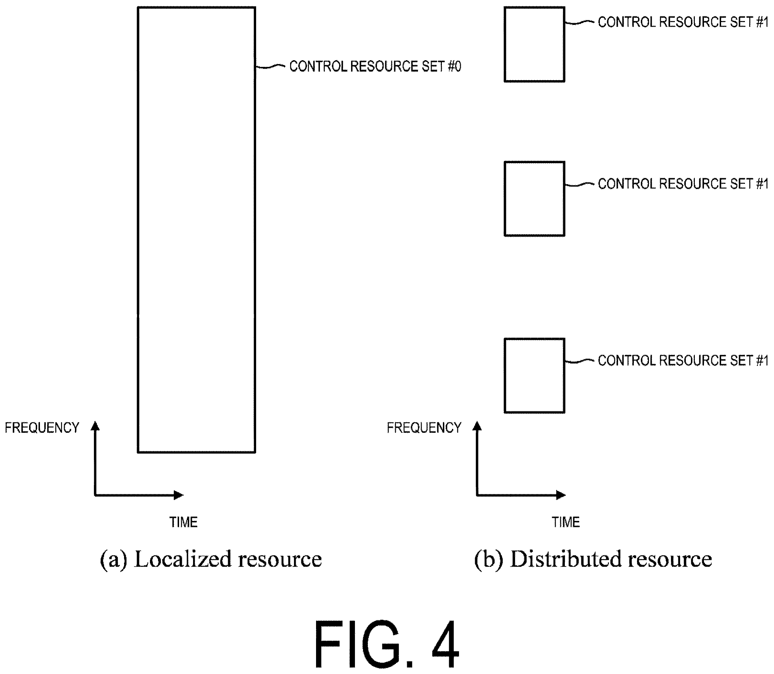

FIG. 4 is a diagram illustrating an example of mapping of control resource sets according to one aspect of the present embodiment. The control resource set may be a time frequency domain in which one or more control channels can be mapped. The control resource set may be a region in which the terminal apparatus 1 attempts to receive and/or detect (Blind Decoding (BD)) the PDCCH. As illustrated in FIG. 4(a), the control resource set (control resource set #0) may include a continuous resource (Localized resource) in the frequency domain. As illustrated in FIG. 4(b), the control resource set (control resource set #1) may include non-continuous resources (distributed resources) in the frequency domain.

In the frequency domain, the unit of mapping of the control resource set may use a resource block. A control resource set may include multiple resource blocks. In the frequency domain, the unit of mapping the control resource set may be multiple resource blocks. In the time domain, the unit of mapping of the control resource set may use an OFDM symbol. A control resource set may include one or two or three OFDM symbols.

The frequency domain of control resource sets may be identical to the system bandwidth of a serving cell. The frequency domain of the control resource sets may be given at least based on the system bandwidth of the serving cell. The frequency domain of the control resource set may be given based on at least higher layer signaling or system information. For example, the position of the resource blocks constituting the control resource set is notified from the base station apparatus 3 to the terminal apparatus 1 by using higher layer signaling. The position of the resource blocks constituting the control resource set for each control resource is notified from the base station apparatus 3 to the terminal apparatus 1 by using higher layer signaling.

The time domain of the control resource set may be given based on at least higher layer signaling or system information. For example, the number of OFDM symbols constituting the control resource set is notified from the base station apparatus 3 to the terminal apparatus 1 by using higher layer signaling. For example, the start position of the OFDM symbols constituting the control resource set is notified from the base station apparatus 3 to the terminal apparatus 1 by using higher layer signaling. For example, the end position of the OFDM symbols constituting the control resource set is notified from the base station apparatus 3 to the terminal apparatus 1 by using higher layer signaling. For example, the position of the subframe in which the control resource set is allocated is notified from the base station apparatus 3 to the terminal apparatus 1 by using higher layer signaling. For example, the position of the slot in which the control resource set is allocated is notified from the base station apparatus 3 to the terminal apparatus 1 by using higher layer signaling. For example, the period of the subframe in which the control resource set is allocated is notified from the base station apparatus 3 to the terminal apparatus 1 by using higher layer signaling. For example, the period of the slot in which the control resource set is allocated is notified from the base station apparatus 3 to the terminal apparatus 1 by using higher layer signaling.

As for the control resource set, one or both types may be used including Common control resource set (Common CORESET) and Dedicated control resource set (UE specific CORESET). The common control resource set may be a control resource set configured commonly to multiple terminal apparatuses 1. The common control resource set may be given based on at least the synchronization signal, the MIB, first system information, second system information, common RRC signaling, dedicated RRC signaling, the cell ID, and the like. For example, the position of the subframe (slot) in which the common control resource set is allocated may be given based on at least the synchronization signal, the MIB, the common RRC signaling, and the like. The dedicated control resource set may be a control resource set configured to be dedicatedly used for individual terminal apparatuses 1. The dedicated control resource set may be given based on at least dedicated RRC signaling and/or a value of C-RNTI.

The control resource set may be a set of control channels (or control channel candidates) to be monitored by the terminal apparatus 1. The control resource set may include a set of control channels (or control channel candidates) to be monitored by the terminal apparatus 1. The control resource set may be configured to include one or multiple Search Spaces (SSs).

The search space includes one or more PDCCH candidates. The terminal apparatus 1 receives a PDCCH candidate included in the search space and attempts to receive a PDCCH (monitor a PDCCH). Here, the PDCCH candidate is also referred to as a blind detection candidate.

The search space may have two types including Common Search Space (CSS) and UE-specific Search Space (USS). The CSS may be a search space configured commonly to multiple terminal apparatuses 1. The USS may be a search space including a configuration to be dedicatedly used for individual terminal apparatuses 1. The CSS may be given based on at least the synchronization signal, the MIB, first system information, second system information, common RRC signaling, dedicated RRC signaling, the cell ID, and the like. The USS may be given based on at least the dedicated RRC signaling and/or the value of C-RNTI.

As for the CSS, the type0-PDCCH CSS for the DCI format scrambled with an SI-RNTI used to transmit system information in the primary cell and the type1-PDCCH CSS for the DCI format scrambled with an INT-RNTI used for initial access may be used. As for the CSS, a type of PDCCH CSS for the DCI format scrambled with a CC-RNTI used for Unlicensed access may be used. The terminal apparatus 1 can monitor the PDCCH candidates in the search spaces. The DCI format scrambled with a prescribed RNTI may be a DCI format to which Cyclic Redundancy Check (CRC) scrambled with a prescribed RNTI is added.

Note that the PDCCH and/or DCI included in the CSS may not include a Carrier Indicator Field (CIF) for indicating for which serving cell (or which component carrier) the PDCCH/DCI schedules the PDSCH or the PUSCH.

Note that, in a case that carrier aggregation (CA) is configured for aggregating multiple serving cells and/or multiple component carriers for the terminal apparatus 1 and communicating (transmitting and/or receiving), the PDCCH and/or DCI included in the USS for a prescribed serving cell (a prescribed component carrier) may include a CIF for indicating for which serving cell and/or which component carrier the PDCCH/DCI schedules the PDSCH or the PUSCH.

Note that, in a case that communication is performed by using one serving cell and/or one component carrier for the terminal apparatus 1, the PDCCH and/or DCI included in the USS may not include a CIF for indicating for which serving cell and/or which component carrier the PDCCH/DCI schedules the PDSCH or the PUSCH.

The common control resource set may include the CSS. The common control resource set may include both of the CSS and the USS. The dedicated control resource set may include the USS. The dedicated control resource set may include the CSS.

In the common control resource set, a PDCCH including control information (Unlicensed access common information) required for Unlicensed access may be transmitted and/or received. In the common control resource set, a PDCCH including resource allocation information for a PDSCH including Remaining Minimum System Information (RMSI) may be transmitted and/or received. In the common control resource set, a PDCCH including a resource allocation information for a PDSCH including a Random Access Response (RAR) may be transmitted and/or received. In the common control resource set, a PDCCH including control information for indicating a Pre-emption resources may be transmitted and/or received. In the common control resource set, a PDCCH including control information for indicating the slot format indicator may be transmitted and/or received. Note that multiple common control resource sets may be configured, and each common control resource set may be allocated in different subframes (slots). Note that multiple common control resource sets may be configured, and each common control resource set may be allocated in the same subframe (slot). Note that multiple common control resource sets may be configured, and different PDCCHs or different control information may be allocated in each common control resource set.

Multiple dedicated control resource sets may be configured in a subframe (slot). Multiple dedicated control resource sets may be configured, and each dedicated control resource set may be allocated in the same subframe (slot). Multiple dedicated control resource sets may be configured, and each dedicated control resource set may be allocated in a different subframe (slot).

A physical resource of the search space includes a Control Channel Element (CCE) of the control channel. The CCE includes a prescribed number of Resource Element Groups (REGs). For example, the CCE may include six REGs. An REG may include a single OFDM symbol of a single Physical Resource Block (PRB). In other words, the REG may include 12 Resource Elements (REs). The PRB is also simply referred to as a Resource Block (RB).

In other words, the terminal apparatus 1 can detect the PDCCH and/or the DCI for the terminal apparatus 1 by blind detecting the PDCCH candidates included in the search space in the control resource set.

The number of blind detection for one control resource set in one serving cell and/or one component carrier may be determined based on the type of search space for the PDCCH included in the control resource set, the type of aggregation level, and the number of PDCCH candidates. Here, the type of the search space may include at least one of CSS and/or USS and/or UE Group SS (UGSS) and/or Group CSS (GCSS). The type of aggregation level indicates the maximum aggregation level supported for the CCEs that constitutes the search space, and may be defined/configured from at least one of {1, 2, 4, 8, ..., X} (X is a prescribed value). The number of PDCCH candidates may indicate the number of PDCCH candidates for a certain aggregation level. In other words, the number of PDCCH candidates may be defined/configured for each of the multiple aggregation levels. Note that the UGSS may be a search space that is commonly assigned to one or multiple terminal apparatuses 1. The GCSS may be a search space in which the DCI including parameters associated with the CSS for one or multiple terminal apparatus 1 is mapped. Note that the aggregation level indicates an aggregation level of a prescribed number of CCEs, and is related to the total number of CCEs that constitute one PDCCH and/or search space.

Note that the size of the aggregation level may be associated with the coverage corresponding to the PDCCH and/or the search space or the size (DCI format size, payload size) of the DCI included in the PDCCH and/or the search space.

Note that, in a case that the start position (start symbol) of the PDCCH symbol is configured for one control resource set, and in a case that more than one PDCCH in the control resource set is detectable in a prescribed period of time, the type of search space for the PDCCH included in the control resource set, the type of aggregation level, and the number of PDCCH candidates may be configured for the time domain corresponding to each start symbol. Each of the type of search space, the type of aggregation level, and the number of PDCCH candidates for the PDCCH included in the control resource set may be configured for each control resource set, may be provided/configured via DCI and/or higher layer signaling, or may be prescribed/configured in advance by specifications. Note that the number of PDCCH candidates may be the number of PDCCH candidates for a prescribed period of time. Note that the prescribed period of time may be 1 millisecond. The prescribed period of time may be 1 microsecond. The prescribed period of time may be a period of one slot. The prescribed period of time may be a period of one OFDM symbol.

Note that in a case that there are more than one start position (start symbol) of the PDCCH symbol for one control resource set, in other words, in a case that there are multiple timings for blind detection (monitoring) of the PDCCH in a prescribed period of time, each of the type of search space for the PDCCH included in the control resource set, the type of aggregation level, and the number of PDCCH candidates may be configured for the time domain corresponding to each start symbol. Each of the type of search space, the type of aggregation level, and the number of PDCCH candidates for the PDCCH included in the control resource set may be configured for each control resource set, may be provided/configured via DCI and/or higher layer signaling, or may be prescribed/configured in advance by specifications.

Note that, as for a method of indicating the number of PDCCH candidates, a configuration may be used in which the number of candidates to be reduced from a prescribed number of PDCCH candidates is defined/configured for each aggregation level.

The terminal apparatus 1 may transmit/notify the base station apparatus 3 of capability information related to blind detection. The terminal apparatus 1 may transmit/notify the base station apparatus 3 of the number of PDCCH candidates that can be processed in one subframe as capability information related to the PDCCH. In a case that more than a prescribed number of control resource sets are configured for one or multiple serving cells/component carriers, the terminal apparatus 1 may transmit/notify the base station apparatus 3 of the capability information related to the blind detection.

In a case that the terminal apparatus 1 supports the first slot format and the second slot format, the terminal apparatus 1 may transmit/notify the base station apparatus 3 of the capability information related to the slot format.

In a case that more than a prescribed number of control resource sets are configured for a prescribed period of time of one or multiple serving cells/component carriers, the terminal apparatus 1 may transmit/notify the base station apparatus 3 of the capability information related to the blind detection.

Note that the capability information related to the blind detection may include information for indicating the maximum number of blind detection in a prescribed period of time. The capability information related to the blind detection may include information for indicating that the PDCCH candidates can be reduced. The capability information related to the blind detection may include information for indicating the maximum number of control resource sets that can be blind detected in a prescribed period of time. Each of the maximum number of the control resource sets and the maximum number of serving cells and/or component carriers capable of monitoring the PDCCH may be configured as individual parameters, or may be configured as common parameters. The capability information related to the blind detection may include information for indicating the maximum number of control resource sets that can simultaneously perform blind detection in a prescribed period of time.

In a case that the terminal apparatus 1 does not support the capability of detection (blind detection) of more than a prescribed number of control resource sets in a prescribed period of time, the terminal apparatus 1 may not transmit/notify the capability information related to the blind detection. In a case that the capability information related to the blind detection is not received, the base station apparatus 3 may perform configuration for the control resource set so as not to exceed the prescribed number of blind detection and transmit the PDCCH.

The configuration for the control resource set may include a parameter for indicating a start position (start symbol) of the PDCCH. The configuration for the control resource set may include a parameter for indicating a time resource region of the control resource set (the number of OFDM symbols constituting the control resource set, the position of the subframe (slot) in which the control resource set is allocated). The configuration for the control resource set may include a parameter for indicating a frequency resource region of the control resource set (the number of resource blocks constituting the control resource set). The configuration for the control resource set may include a parameter for indicating the type of mapping from CCE to REG. The configuration for the control resource set may include the REG bundle size. The configuration for the control resource set may include a parameter for indicating the CCE aggregation level of the USS. The configuration for the control resource set may include a parameter for indicating a period (a subframe period, a start position of a subframe) for monitoring the PDCCH and/or the control resource set. Depending on the start position of the PDCCH, the maximum number of blind detection of the PDCCH may be configured separately.

The unit of the physical resource according to the present embodiment will be described below.

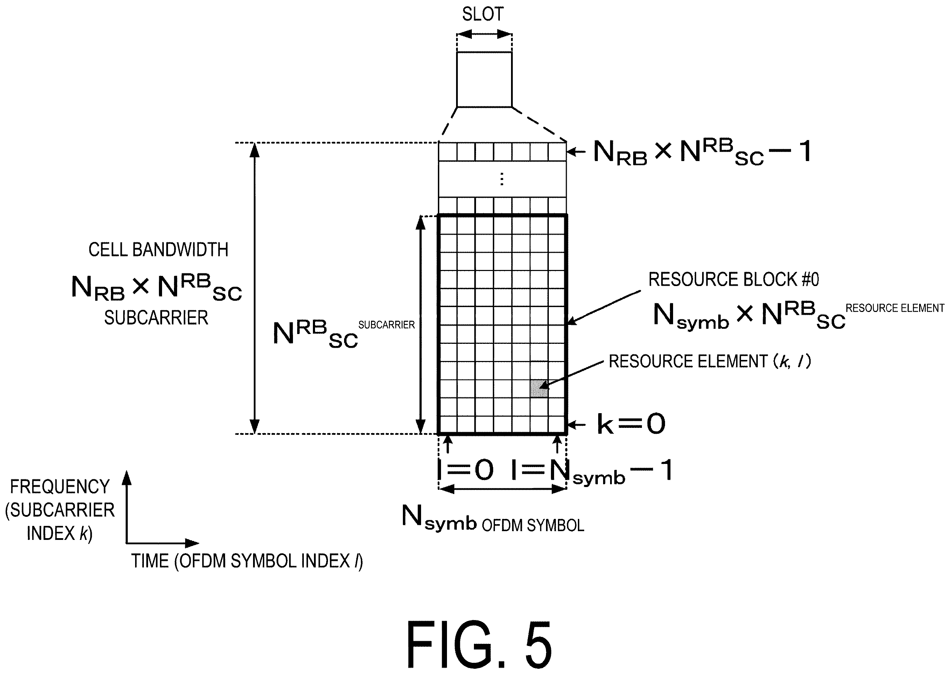

FIG. 5 is a diagram illustrating an example of resource elements included in the slot according to one aspect of the present embodiment. Here, the resource element (RE) is a resource defined by one OFDM symbol and one subcarrier. As illustrated in FIG. 5, the slot includes Nsymb pieces of OFDM symbols. The number of subcarriers included in the slot may be given by a product of the number of resource blocks NRB included in the slot and the number of subcarriers per resource block NRBSC. Here, the resource block is a group of the resource elements in the time domain and the frequency domain. The resource block may be used as a unit of resource allocation in the time domain and/or the frequency domain. For example, the NRBSC may be 12. The Nsymb may be the same as the number of OFDM symbols included in the subframe. The Nsymb may be the same as the number of OFDM symbols included in the slot. the NRB may be given based on the bandwidth of the cell and the subcarrier spacing. The NRB may be given based on higher layer signaling (for example, RRC signaling) transmitted from the base station apparatus 3, and the like. The NRB may be given based on the description in the specifications, and the like. The resource element is identified by an index k for the subcarrier and an index l for the OFDM symbol.

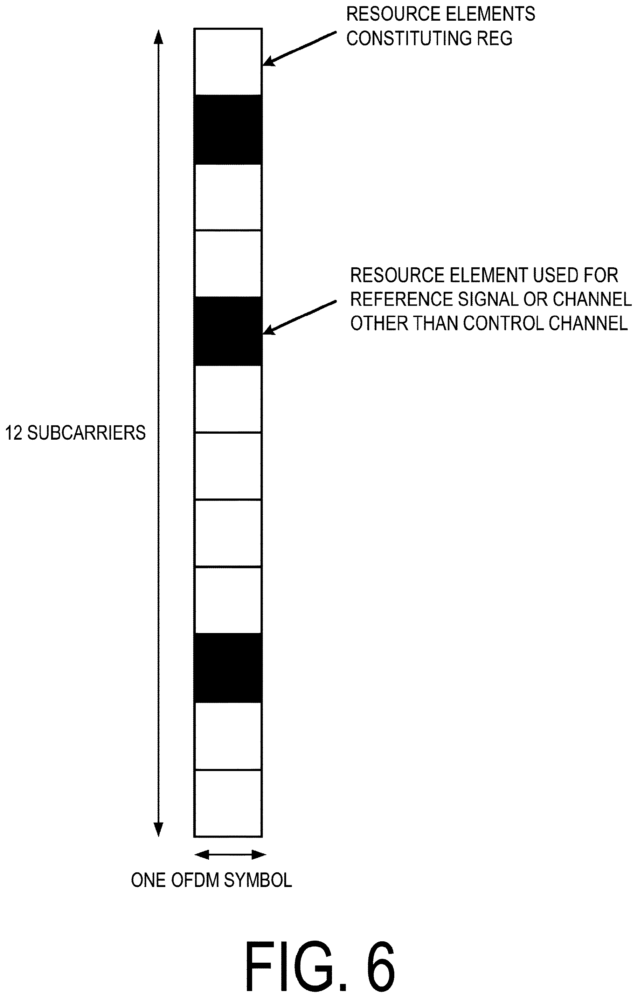

FIG. 6 is a diagram illustrating an example of a configuration of one REG according to one aspect of the present embodiment. The REG may include one OFDM symbol in one PRB. That is, the REG may include 12 pieces of continuous REs in the frequency domain. Some of the REs constituting the REG may be an RE to which the downlink control information is not mapped. The REG may be configured to include the RE to which the downlink control information is not mapped or may be configured not to include the RE to which the downlink control information is not mapped. The RE to which the downlink control information is not mapped may be an RE to which the reference signal is mapped, may be an RE to which a channel other than the control channel is mapped, or may be an RE which the terminal apparatus 1 assumes to have no control channel mapped.

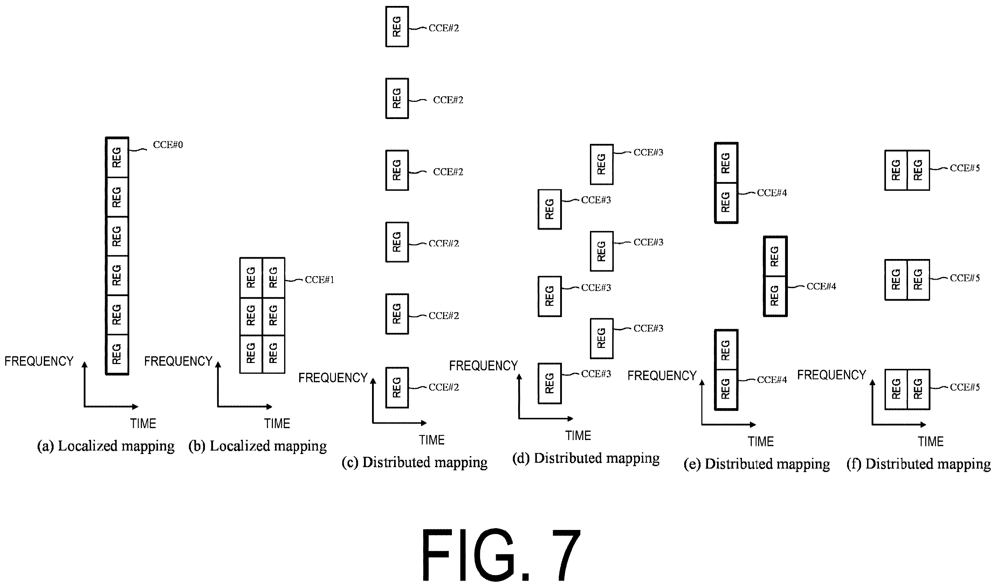

FIG. 7 is a diagram illustrating a configuration example of CCEs according to one aspect of the present embodiment. The CCE may include six REGs. As illustrated in FIG. 7(a), the CCE (CCE #0) may include REGs continuously mapped (such mapping may be referred to as Localized mapping) (such mapping may be referred to as non-interleaved CCE-to-REG mapping) (such mapping may be referred to as non-interleaved mapping). Note that all the REGs constituting the CCE may not be continuous in the frequency domain. For example, in a case that all of the multiple resource blocks constituting the control resource set are not continuous in the frequency domain, even in a case that the number assigned to REGs is continuous, each resource block constituting each REG with continuous numbers is not continuous in the frequency domain. In a case that the control resource set includes multiple OFDM symbols and multiple REGs constituting one CCE are allocated over multiple time periods (OFDM symbols), the CCE (CCE #1) may be constituted by a group of REGs continuously mapped, as illustrated in FIG. 7(b). As illustrated in FIG. 7(c), the CCE (CCE #2) may include REGs non-continuously mapped (such mapping may be referred to as Distributed mapping) (such mapping may be referred to as interleaved CCE-to-REG mapping) (such mapping may be referred to as interleaved mapping). The REGs constituting the CCE may be non-continuously mapped to the resources in the time frequency domain by using an interleaver. In a case that the control resource set includes multiple OFDM symbols and multiple REGs constituting one CCE are allocated over multiple time periods (OFDM symbols), the CCE (CCE #3) may be constituted by REGs non-continuously mapped, with REGs of different time periods (OFDM symbols) being mixed, as illustrated in FIG. 7(d). As illustrated in FIG. 7(e), the CCE (CCE #4) may include REGs mapped dispersedly in a group unit of multiple REGs. As illustrated in FIG. 7(f), the CCE (CCE #5) may include REGs mapped dispersedly in a group unit of multiple REGs.

The CCE may be configured to include one or more REG groups. The REG group is also referred to as a REG bundle. The number of REGs constituting one group of REGs is referred to as Bundle size. For example, the Bundle size of REG may be either 1, 2, 3, or 6. An interleaver may be applied in an interleaved mapping in a REG bundle unit. The terminal apparatus 1 may assume that precoders applied to the REs in the REG group are the same. The terminal apparatus 1 can perform channel estimation assuming that the precoder applied to the REs in the REG group is the same. Meanwhile, the terminal apparatus 1 may assume that the precoders applied to the REs are not the same between the REG groups. In other words, the terminal apparatus 1 need not assume that the precoders applied to the REs are the same between the REG groups. The phrase "between the REG groups" may also be interpreted as "between the two different REG groups". The terminal apparatus 1 can perform the channel estimation assuming that the precoders applied to the REs are not the same between the REG groups. The details of the REG group are described later.

The number of CCEs constituting the PDCCH candidate is also referred to as an Aggregation Level (AL). In a case that one PDCCH candidate is constituted by an aggregation of multiple CCEs, one PDCCH candidate includes multiple CCEs with successive numbers of CCEs. A set of the PDCCH candidates with the aggregation level of ALX is also referred to as a search space with the aggregation level ALX. In other words, the search space with the aggregation level ALX may include one or more PDCCH candidates with the aggregation level of ALX. The search space may also include the PDCCH candidates with the multiple aggregation levels. For example, the CSS may include the PDCCH candidates with the multiple aggregation levels. For example, the USS may include the PDCCH candidates with the multiple aggregation levels. A set of the aggregation levels of the PDCCH candidates included in the CSS and a set of the aggregation levels of the PDCCH candidates included in the USS may be each defined/configured.

Hereinafter, the REG group will be described.

The REG group may be used for channel estimation in the terminal apparatus 1. For example, the terminal apparatus 1 performs the channel estimation for each REG group. This is based on a difficulty in performing the channel estimation (for example, MMSE channel estimation and the like) in the REs for the reference signals to which different precoders are applied. Here, the MMSE is an abbreviation for Minimum Mean Square Error.

The accuracy of channel estimation varies depending on at least a power allocated to the reference signal, a density of an RE in the time frequency domain, the RE being used for the reference signal, an environment of a radio channel, and the like. The accuracy of channel estimation varies depending on at least the time frequency domain used for the channel estimation. In various aspects of the present embodiment, the REG group may be used as a parameter to configure the time frequency domain used for the channel estimation.

That is, a larger REG group means that a higher gain of the channel estimation accuracy can be obtained. Meanwhile, a smaller REG group means that a larger number of REG groups are included in one PDCCH candidate. The larger number of REG groups in one PDCCH candidate is preferable for a transmission method (referred to as precoder rotation, precoder cycling, and the like) that obtains spatial diversity by applying individual precoders to the respective REG groups.

One REG group may include continuous or close REGs in the time domain and/or the frequency domain.

The REG group in the time domain is preferable for improving the channel estimation accuracy and/or reduction in the reference signals. For example, the number of REGs constituting the REG group in the time domain may be 1, 2, 3, or another value. The number of REGs constituting the REG group in the time domain may be given based on at least the number of OFDM symbols included in the control resource set. The number of REGs constituting the REG group in the time domain may be the same as the number of OFDM symbols included in the control resource set.

The REG group in the frequency domain contributes to the improvement of the channel estimation accuracy. For example, the number of REGs constituting the REG group in the frequency domain may be 2, 3, at least a multiple of 2, or at least a multiple of 3. The number of REGs constituting the REG group in the frequency domain may be given based on at least the number of PRBs in the control resource set. The number of REGs constituting the REG group in the frequency domain may be the same as the number of PRBs included in the control resource set.

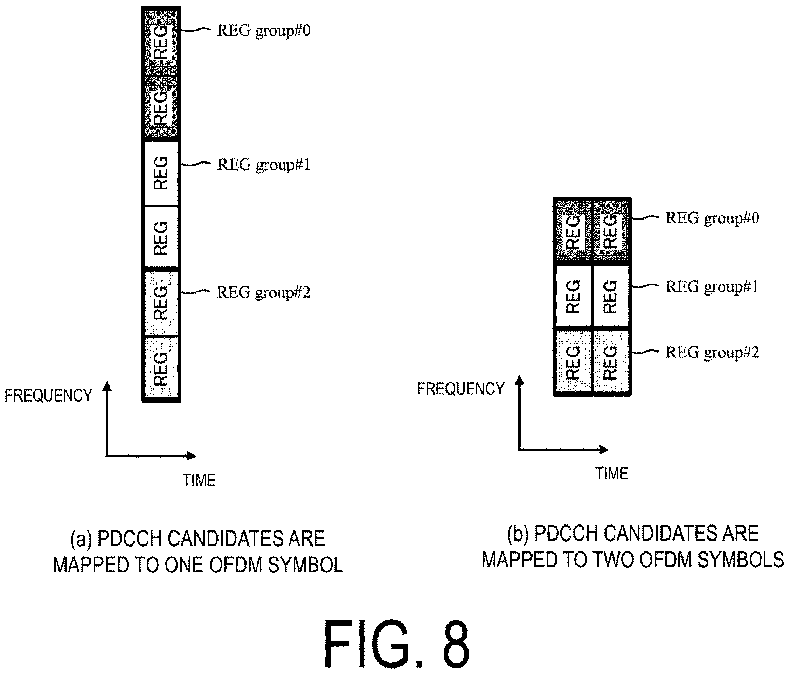

FIG. 8 is a diagram illustrating an example on the number of REGs constituting a PDCCH candidate and REGs constituting a group of REGs according to one aspect of the present embodiment. In an example illustrated in FIG. 8(a), the PDCCH candidates are mapped to one OFDM symbol, and three REG groups including two REGs are configured. In other words, in an example illustrated in FIG. 8(a), one REG group includes the two REGs. The number of REGs constituting the REG group in the frequency domain may include a divisor of the number of PRBs mapped in the frequency direction. In the example illustrated in FIG. 8(a), the number of REGs constituting the REG group in the frequency domain may be 1, 2, 3, or 6.

In an example illustrated in FIG. 8(b), the PDCCH candidates are mapped to two OFDM symbols, and three REG groups including two REGs are configured. In the example illustrated in FIG. 8(b), the number of REGs constituting the REG group in the frequency domain may be either 1 or 3.

The number of REGs constituting the REG group in the frequency domain may be given based on at least the number of OFDM symbols to which the PDCCH candidates are mapped. The number of REGs constituting the REG group in the frequency domain may be configured individually for the number of OFDM symbols to which the PDCCH candidate is mapped. The number of REGs constituting the REG group in the frequency domain may be given based on at least the mapping method (mapping type) of the REGs constituting the CCE. The number of REGs constituting the REG group in the frequency domain may be configured individually for the mapping method of the REGs constituting the CCE. The method for mapping the REGs constituting the CCE may be either an interleaved mapping or a non-interleaved mapping. The method for mapping the REGs constituting the CCE may be either a continuous mapping method (Localized transmission) or a non-continuous mapping method (Distributed transmission). The number of REGs constituting the REG group in the frequency domain may be given based on at least the number of OFDM symbols to which one CCE is mapped. The number of REGs constituting the REG group in the frequency domain may be configured individually for the number of OFDM symbols to which one CCE is mapped.

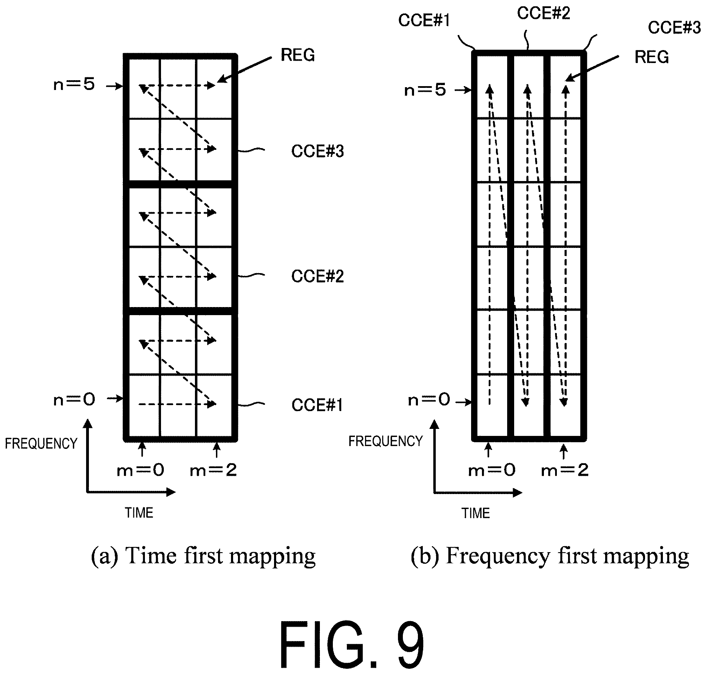

FIG. 9 is a diagram illustrating an example of the mapping of the REGs constituting the CCE according to one aspect of the present embodiment. Here, a case is illustrated in which the number of OFDM symbols constituting the control resource set is three. In FIG. 9, the CCE includes the six REGs. In FIG. 9, values of m = 0 to 2 (0, 1, 2) are assigned to indices m of the REGs in the time domain from the left. In FIG. 9, values of n = 0 to 5 (0, 1, 2, 3, 4, 5) are assigned to indices n of the REGs in the frequency domain from below. FIG. 9(a) illustrates an example in which the REGs constituting the CCE are mapped in a Time first manner. The Time first mapping is a mapping method that maps the REGs from a lower (smaller) index to a higher (bigger) index of the REGs in the time domain and increment the index of the REG in the frequency domain by one at a point of time when the index of the REG in the time domain reaches the maximum. FIG. 9(b) illustrates an example in which the REGs constituting the CCE are mapped in a Frequency first manner. The Frequency first mapping is a mapping method that maps the REGs from a lower index (smaller) index to a higher (bigger) index of the REGs in the frequency domain and increment the index of the REG in the time domain by one at a point of time when the index of the REG in the frequency domain reaches the maximum.

The number of REGs constituting the REG group in the time domain may be given based on at least the number of OFDM symbols to which the PDCCH candidates are mapped. The number of REGs constituting the REG group in the time domain may be configured individually for the number of OFDM symbols to which the PDCCH candidates are mapped. The number of REGs constituting the REG group in the time domain may be given based on at least the number of OFDM symbols to which one CCE is mapped. The number of REGs constituting the REG group in the time domain may be configured individually for the number of OFDM symbols to which one CCE is mapped.

The REG group in the time domain is also preferable for reduction in the reference signals. As illustrated in FIG. 8(b), in a case that the REG group is configured, the reference signal may be included in an anterior OFDM symbol and/or a posterior OFDM symbol. For example, in the time domain, the first REG (head REG) in the REG group may include an RE to which the downlink control information is not mapped, and REGs other than the first REG in the REG group need not include REs to which the downlink control information is not mapped.

A configuration example of the terminal apparatus 1 according to one aspect of the present embodiment will be described below.

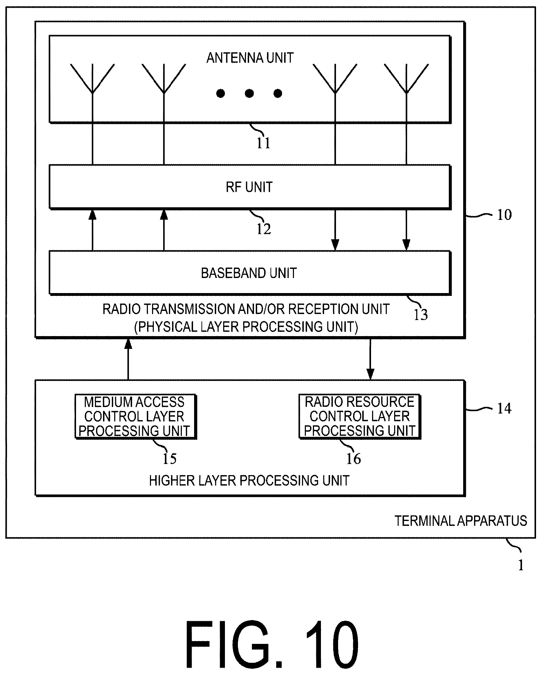

FIG. 10 is a schematic block diagram illustrating the configuration of the terminal apparatus 1 according to the present embodiment. As illustrated, the terminal apparatus 1 includes a radio transmission and/or reception unit 10 and a higher layer processing unit 14. The radio transmission and/or reception unit 10 includes an antenna unit 11, a Radio Frequency (RF) unit 12, and a baseband unit 13. The higher layer processing unit 14 includes a medium access control layer processing unit 15 and a radio resource control layer processing unit 16. The radio transmission and/or reception unit 10 is also referred to as a transmitter, a receiver or a physical layer processing unit. The physical layer processing unit includes a decoding unit. The receiver of the terminal apparatus 1 receives the PDCCH. The decoding unit of the terminal apparatus 1 decodes the received PDCCH. More specifically, the decoding unit of the terminal apparatus 1 performs blind decoding processing on the received signal of the resource to which the PDCCH candidate of the USS corresponds. The decoding unit of the terminal apparatus 1 performs brand decoding processing on the received signal of the resource to which the PDCCH candidate of the CSS corresponds. The reception processing unit of the terminal apparatus 1 monitors the PDCCH candidates in the control resource set. The reception processing unit of the terminal apparatus 1 monitors PDCCH candidates to be used for the PDCCH including the CC-RNTI. The reception processing unit of the terminal apparatus 1 monitors the PDCCH candidates in the first control resource set and the second control resource set. The first control resource set includes OFDM symbols in the first half of the slot. The second control resource set includes OFDM symbols in the latter half of the slot. The reception processing unit of the terminal apparatus 1 monitors the first number of PDCCH candidates in the first control resource set and the second number of PDCCH candidates in the second control resource set in the slot until it is determined that the base station apparatus 3 is transmitting a signal. The reception processing unit of the terminal apparatus 1 monitors the third number of PDCCH candidates in the first control resource set in the slot after it is determined that the base station apparatus 3 is transmitting a signal. The third number is greater than the first number. The sum of the first number and the second number may be equal to the third number.

The higher layer processing unit 14 outputs uplink data (transport block) generated by a user operation or the like, to the radio transmission and/or reception unit 10. The higher layer processing unit 14 performs processing of a MAC layer, a Packet Data Convergence Protocol (PDCP) layer, a Radio Link Control (RLC) layer, and an RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various types of configuration information/parameters of the terminal apparatus 1. The radio resource control layer processing unit 16 sets various types of configuration information/parameters based on a higher layer signaling received from the base station apparatus 3. Namely, the radio resource control layer processing unit 16 sets the various configuration information/parameters in accordance with the information for indicating the various configuration information/parameters received from the base station apparatus 3. The radio resource control layer processing unit 16 configures the control resource set, based on the RRC signaling received from the base station apparatus 3. The radio resource control layer processing unit 16 configures the first control resource set and the second control resource set, based on the RRC signaling received from the base station apparatus 3. The radio resource control layer processing unit 16 configures the OFDM symbols constituting the first control resource set, based on the RRC signaling received from the base station apparatus. The radio resource control layer processing unit 16 configures OFDM symbols constituting the first control resource set to OFDM symbols in the first half of the slot. The radio resource control layer processing unit 16 configures the OFDM symbols constituting the second control resource set, based on the RRC signaling received from the base station apparatus. The radio resource control layer processing unit 16 configures OFDM symbols constituting the second control resource set to OFDM symbols in the latter half of the slot. The radio resource control layer processing unit 16 configures the number (first number, third number) of PDCCH candidates to be monitored in the first control resource set. The radio resource control layer processing unit 16 configures the number (second number) of PDCCH candidates to be monitored in the second control resource set. The first number is the number of PDCCH candidates to be monitored in the first control resource set in the slot until it is determined in the terminal apparatus 1 that the base station apparatus 3 is transmitting a signal. The second number is the number of PDCCH candidates to be monitored in the second control resource set in the slot until it is determined in the terminal apparatus 1 that the base station apparatus 3 is transmitting a signal. The third number is the number of PDCCH candidates to be monitored in the first control resource set in the slot it is determined in the terminal apparatus 1 that the base station apparatus 3 is transmitting a signal.

The radio transmission and/or reception unit 10 performs processing of the physical layer, such as modulation, demodulation, coding, decoding, and the like. The radio transmission and/or reception unit 10 demultiplexes, demodulates, and decodes a signal received from the base station apparatus 3, and outputs the information resulting from the decoding to the higher layer processing unit 14. The radio transmission and/or reception unit 10 generates a transmit signal by modulating and coding data, and performs transmission to the base station apparatus 3.

The RF unit 12 converts (down-converts) a signal received via the antenna unit 11 into a baseband signal by orthogonal demodulation and removes unnecessary frequency components. The RF unit 12 outputs a processed analog signal to the baseband unit.

The baseband unit 13 converts the analog signal input from the RF unit 12 into a digital signal. The baseband unit 13 removes a portion corresponding to a Cyclic Prefix (CP) from the converted digital signal, performs a Fast Fourier Transform (FFT) of the signal from which the CP has been removed, and extracts a signal in the frequency domain.

The baseband unit 13 generates an OFDM symbol by performing Inverse Fast Fourier Transform (IFFT) of the data, adds CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 by using a low-pass filter, up-converts the analog signal into a signal of a carrier frequency, and transmits the up-converted signal via the antenna unit 11. The RF unit 12 amplifies power. The RF unit 12 may have a function of controlling transmit power. The RF unit 12 is also referred to as a transmit power control unit.

The terminal apparatus 1 receives the PDCCH. The radio resource control layer processing unit 16 configures the control resource set, based on the RRC signaling. The radio resource control layer processing unit 16 configures a control resource set (first control resource set, second control resource set), based on RRC signaling. The receiver of the terminal apparatus 1 monitors multiple PDCCH candidates in a configured control resource set. The receiver of the terminal apparatus 1 monitors multiple PDCCH candidates in the first control resource set and the second control resource set configured in a certain slot. The receiver of the terminal apparatus 1 monitors multiple PDCCH candidates in the first control resource set configured in a certain slot. The decoding unit of the terminal apparatus 1 decodes the monitored PDCCH candidates. The radio resource control layer processing unit 16 configures the first control resource set to the OFDM symbols in the first half of the slot. The radio resource control layer processing unit 16 configures the second control resource set to the OFDM symbols in the latter half of the slot. The receiver of the terminal apparatus 1 monitors the first number of PDCCH candidates in the first control resource set and the second number of PDCCH candidates in the second control resource set in a certain slot. The receiver of the terminal apparatus 1 monitors the third number of PDCCH candidates in the first control resource set in a certain slot. The receiver of the terminal apparatus 1 monitors the first number of PDCCH candidates in the first control resource set and the second number of PDCCH candidates in the second control resource set in the slot until it is determined that the base station apparatus 3 is transmitting a signal. The receiver of the terminal apparatus 1 monitors the third number of PDCCH candidates in the first control resource set in the slot after it is determined that the base station apparatus 3 is transmitting a signal. The third number is greater than the first number (the third number is different from the first number). The sum of the first number and the second number is equal to the third number.

A configuration example of the base station apparatus 3 according to one aspect of the present embodiment will be described below.

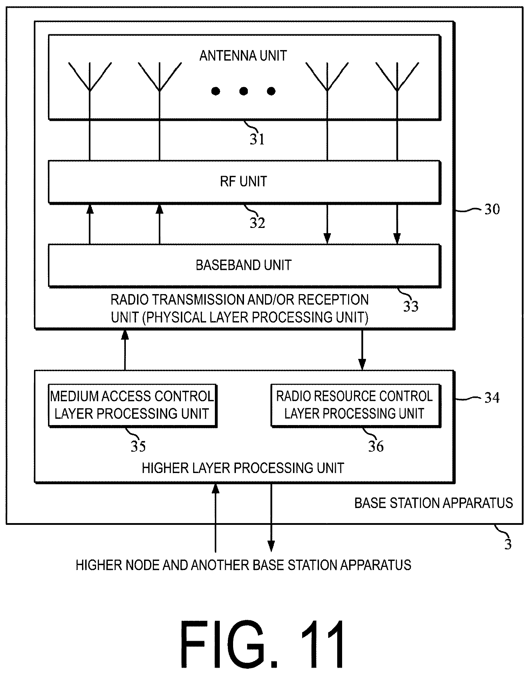

FIG. 11 is a schematic block diagram illustrating the configuration of the base station apparatus 3 according to the present embodiment. As illustrated, the base station apparatus 3 includes a radio transmission and/or reception unit 30 and a higher layer processing unit 34. The radio transmission and/or reception unit 30 includes an antenna unit 31, an RF unit 32, and a baseband unit 33. The higher layer processing unit 34 includes a medium access control layer processing unit 35 and a radio resource control layer processing unit 36. The radio transmission and/or reception unit 30 is also referred to as a transmitter, a receiver or a physical layer processing unit.

The higher layer processing unit 34 performs processing of a MAC layer, a PDCP layer, an RLC layer, and an RRC layer.

The medium access control layer processing unit 35 included in the higher layer processing unit 34 performs processing of the MAC layer.

The radio resource control layer processing unit 36 included in the higher layer processing unit 34 performs processing of the RRC layer. The radio resource control layer processing unit 36 generates, or acquires from a higher node, downlink data (transport block) allocated on a PDSCH, system information, an RRC message (RRC signaling), a MAC CE, and the like, and outputs the data to the radio transmission and/or reception unit 30. The radio resource control layer processing unit 36 manages various types of configuration information/parameters for each of the terminal apparatuses 1. The radio resource control layer processing unit 36 may set various types of configuration information/parameters for each of the terminal apparatuses 1 via higher layer signaling. That is, the radio resource control layer processing unit 36 transmits/reports information indicating various types of configuration information/parameters.

The radio resource control layer processing unit 36 configures a control resource set for the terminal apparatus 1. The radio resource control layer processing unit 36 configures the first control resource set and the second control resource set for the terminal apparatus 1. The first number of PDCCH candidates are configured for the first control resource set for the terminal apparatus 1 in a certain slot, and the second number of PDCCH candidates is configured for the second control resource set for the terminal apparatus 1 in the same slot. In a slot, the third number of PDCCH candidates is configured for the first control resource set for the terminal apparatus 1. The first number of PDCCH candidates is configured for the first control resource set for the slot in which the transmission of signals is first started for the terminal apparatus 1 after Listen-Before-Talk in the base station apparatus 3. The second number of PDCCH candidates is configured for the second control resource set for the slot in which the transmission of signals is first started for the terminal apparatus 1 after Listen-Before-Talk in the base station apparatus 3. The third number of PDCCH candidates is configured for the first control resource set for subsequent slots of the slot in which the transmission of signals is first started for the terminal apparatus 1 after Listen-Before-Talk in the base station apparatus 3. The third number is greater than the first number (the third number is different from the first number). The sum of the first number and the second number is equal to the third number.

The functionality of the radio transmission and/or reception unit 30 is similar to the functionality of the radio transmission and/or reception unit 10. The radio transmission and/or reception unit 30 identifies the Search Space (SS) configured for the terminal apparatus 1. The radio transmission and/or reception unit 30 identifies the search space in the first control resource set configured for the terminal apparatus 1 and the search space in the second control resource set configured for the terminal apparatus 1. The radio transmission and/or reception unit 30 identifies the PDCCH candidates to be monitored in the terminal apparatus 1, and identifies the search space. The radio transmission and/or reception unit 30 identifies of which control channel elements each of the PDCCH candidates to be monitored in the terminal apparatus 1 is constituted (identifies the number of control channel elements of which the PDCCH candidates are constituted). The radio transmission and/or reception unit 30 includes an SS identification unit, and the SS identification unit identifies the SS configured for the terminal apparatus 1. The SS identification unit identifies one or more PDCCH candidates in the control resource set configured as the Search space of the terminal apparatus. The SS identification unit identifies PDCCH candidates (the number of PDCCH candidates, the numbers of PDCCH candidates) configured in the search space in the first control resource set and the second control resource set of the terminal apparatus 1. The SS identification unit identifies that the first number of PDCCH candidates is configured in the search space in the first control resource set for the slot in which the transmission of signals is first started for the terminal apparatus 1 after Listen-Before-Talk by the base station apparatus 3. The SS identification unit identifies that the second number of PDCCH candidates is configured in the search space in the second control resource set for the slot in which the transmission of signals is first started for the terminal apparatus 1 after Listen-Before-Talk by the base station apparatus 3. The SS identification unit identifies that the third number of PDCCH candidates is configured in the search space in the first control resource set for subsequent slots of the slot in which the transmission of signals is first started for the terminal apparatus 1 after Listen-Before-Talk by the base station apparatus 3. The transmitter of the radio transmission and/or reception unit 30 transmits the PDCCH by using the PDCCH candidates in the first control resource set or the second control resource set for the terminal apparatus 1. The transmitter of the radio transmission and/or reception unit 30 transmits the PDCCH by using the PDCCH candidates in the search space in the first control resource set or the second control resource set for the terminal apparatus 1.

Each of the units having the reference signs 10 to 16 included in the terminal apparatus 1 may be configured as a circuit. Each of the units having the reference signs 30 to 36 included in the base station apparatus 3 may be configured as a circuit.

An example of an initial connection procedure according to the present embodiment will be described below.

The base station apparatus 3 includes a communicable range (or a communication area) controlled by the base station apparatus 3. The communicable range is divided into one or multiple cells (or serving cells, sub-cells, beams, and the like), and communications with the terminal apparatus 1 can be managed for each cell. Meanwhile, the terminal apparatus 1 selects at least one cell from the multiple cells and attempts to establish a connection with the base station apparatus 3. Here, a first state in which the connection between the terminal apparatus 1 and at least one cell of the base station apparatus 3 is established is also referred to as RRC Connection. A second state in which the terminal apparatus 1 has not established the connection with any cell of the base station apparatus 3 is also referred to as RRC idle. A third state in which the connection of the terminal apparatus 1 with at least one cell of the base station apparatus 3 is established but some functions are limited between the terminal apparatus 1 and the base station apparatus 3 is also referred to as RRC suspended. The RRC suspended is also referred to as RRC inactive.

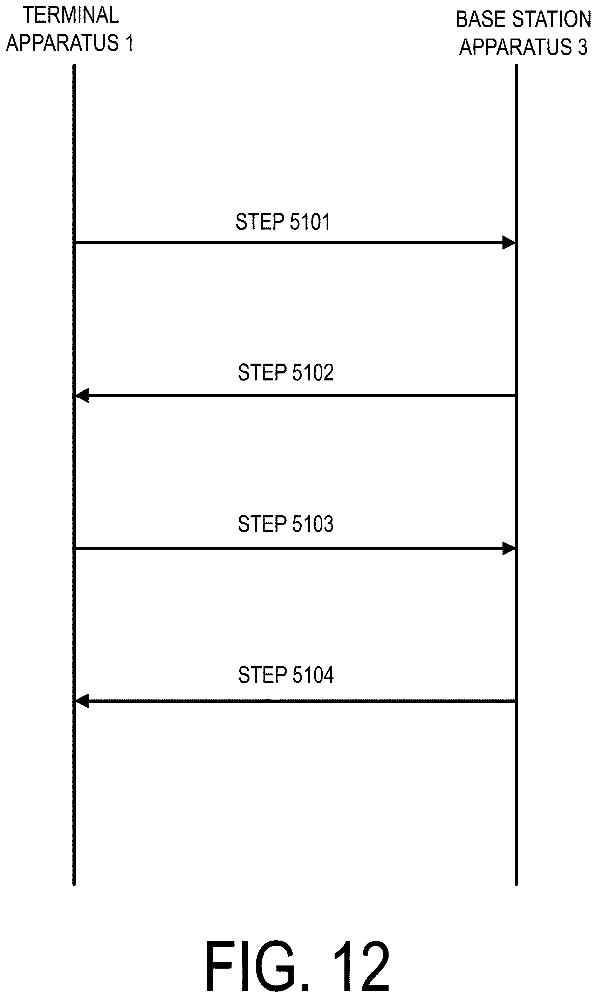

The terminal apparatus 1 in RRC idle may attempt to establish a connection with at least one cell of the base station apparatus 3. Here, the cell to which the terminal apparatus 1 attempts to connect is also referred to as a target cell. FIG. 12 is a diagram illustrating an example of a first initial connection procedure (4-step contention based RACH procedure) according to one aspect of the present embodiment. The first initial connection procedure includes at least some of Steps 5101 to 5104.

Step 5101 is a step in which the terminal apparatus 1 requests, via a physical channel, a target cell to respond for initial connection. Alternatively, step 5101 is a step in which the terminal apparatus 1 performs initial transmission to the target cell via the physical channel. Here, the physical channel may be a PRACH, for example. The physical channel may be a channel dedicatedly used to request a response for initial connection. In step 5101, the message transmitted from the terminal apparatus 1 via the physical channel is also referred to as a random access message 1. The signal of the random access message 1 may be generated based on the random access preamble index u given by a higher layer of the terminal apparatus 1.

The terminal apparatus 1 performs downlink time-frequency synchronization prior to performing step 5101. In a first state, a synchronization signal is used for the terminal apparatus 1 to establish downlink time-frequency synchronization.

The synchronization signal including an ID of a target cell (cell ID) may be transmitted. The synchronization signal including a sequence generated at least based on the cell ID may be transmitted. The synchronization signal including the cell ID may means that the sequence of the synchronization signal is given based on the cell ID. The synchronization signal may be transmitted with application of a beam (or precoder).

The beam exhibits a phenomenon in which antenna gain varies depending on directions. The beam may be given at least based on the directivity of an antenna. The beam may also be given at least based on a phase transformation of a carrier signal. The beam may also be given by the application of the precoder.

The terminal apparatus 1 receives the PBCH transmitted from the target cell. The PBCH may be transmitted that includes essential information block (Master Information Block (MIB) and Essential Information Block (EIB)) including the essential system information used for the connection of the terminal apparatus 1 with the target cell. The essential information block is system information. The essential information block may include information on the radio frame number. The essential information block may include information on a position in a super frame including multiple radio frames (e.g., information for indicating at least some of System Frame Numbers (SFNs) in the super frame). The PBCH may include an index of the synchronization signal. The PBCH may include information on the reception of a PDCCH. The essential information block may be mapped to a BCH in a transport channel. The essential information block may be mapped to a BCCH in a logical channel.

The information relating to reception of the PDCCH may include information for indicating a control resource set. The information for indicating the control resource set may include information relating to the number and positions of PRBs to which the control resource set is mapped. The information for indicating the control resource set may include information for indicating mapping of the control resource set. The information for indicating the control resource set may include information relating to the number of OFDM symbols to which the control resource set is mapped. The information for indicating the control resource set may include information for indicating the period (periodicity) of the slot to which the control resource set is mapped. The information for indicating the control resource set may include information for indicating the position in the time domain of the subframe or the slot on which the control resource set is placed. The terminal apparatus 1 may attempt to receive the PDCCH based on at least the information for indicating the control resource set included in the PBCH.

The Information relating to reception of the PDCCH may include information relating to an ID for indicating the destination of the PDCCH. The ID for indicating the destination of the PDCCH may be an ID used for scrambling the CRC-bits to be added to the PDCCH. The ID for indicating the destination of the PDCCH is also referred to as a Radio Network Temporary Identifier (RNTI). Information relating to the ID used for scrambling the CRC bits added to the PDCCH may be included. The terminal apparatus 1 may attempt to receive the PDCCH based on at least the information relating to the ID included in the PBCH.

The RNTI may include a System Information-RNTI (SI-RNTI), a Paging-RNTI (a P-RNTI), a Common RNTI (C-RNTI), a Temporary C-RNTI, a Random Access-RNTI (RA-RNTI), and a Common Control-RNTI (CC-RNTI). The SI-RNTI is used at least for scheduling the PDSCH transmitted with system information included therein. The P-RNTI is used at least for scheduling the PDSCH transmitted with paging information and/or information such as notification of change of the system information included therein. The C-RNTI is used at least for scheduling user data to the terminal apparatus 1 in RRC connection. The Temporary C-RNTI is used at least for scheduling a random access message 4. The temporary C-RNTI is used at least for scheduling of the PDSCH including data to be mapped to a CCCH in the logical channel. The RA-RNTI is used at least for scheduling of the random access message 2. The CC-RNTI is at least used for transmitting and/or receiving control information for Unlicensed access.

The common control resource set on which the PDSCH is transmitted and/or received including the PDSCH resource allocation information to be used to transmit and/or receive system information (Remeining Minimum System Information (RMSI), Other System Information (OSI)) may be allocated in association with the synchronization signal. A common control resource set may be allocated in the same or close subframe as the time domain in which the synchronization signal is allocated.

The information relating to reception of the PDCCH may include information relating to an aggregation level of the search space included in the control resource set. The terminal apparatus 1 may identify the aggregation level of PDCCH candidates whose reception should be attempted and determine the search space, based on at least the information relating to the aggregation level of the search space included in the control resource set included in the PBCH.

The information relating to the reception of the PDCCH may include information on the REG group (REG bundle size). The information on the reception of the PDCCH may include information for indicating the number of REGs constituting the REG group in the frequency domain. The information on the reception of the PDCCH may include information for indicating the number of REGs constituting the REG group in the time domain.

The reference signals corresponding to the control resource set may correspond to multiple PDCCH candidates included in the control resource set. The reference signals corresponding to the control resource set may be used for demodulation of the multiple PDCCHs included in the control resource set.

The base station apparatus 3 can transmit the PBCH including information on the reception of the PDCCH and indicate monitoring of a common control resource set to the terminal apparatus 1. The terminal apparatus 1 monitors the common control resource set, based on at least detecting of information relating to reception of the PDCCH included in the PBCH. The common control resource set is used at least for scheduling of the first system information (RMSI, OSI). The first system information may include system information important for the terminal apparatus 1 to connect to the target cell. The first system information may include information on various configurations of downlink. The first system information may include information on various configurations of PRACH. The first system information may include information on various configurations of uplink. The first system information may include information of a signal waveform (OFDM or DFT-s-OFDM) configured for random access message 3 transmission. The first system information may include at least a part of the system information other than information included in the MIB. The first system information may be mapped to the BCH in the transport channel. The first system information may be mapped to the BCCH in the logical channel. The first system information may include at least System Information Block type 1 (SIB1). The first system information may include at least System Information Block type 2 (SIB2). The common control resource set may be used for scheduling the random access message 2. The SIB1 may include information relating to a measurement required to perform RRC connection. The SIB2 may include information relating to a channel which is common and/or shared among multiple terminal apparatuses 1 in a cell.

The terminal apparatus 1 may monitor the PDCCH based on at least the information on the reception of the PDCCH. The terminal apparatus 1 may monitor the PDCCH based on at least the information on the REG group. The terminal apparatus 1 may assume the configuration applied for monitoring the PDCCH based on at least the information on the reception of the PDCCH.

The base station apparatus 3 can transmit the MIB and/or the first system information and indicate the monitoring of the common control resource set to the terminal apparatus 1. The first system information may include the information on the reception of the PDCCH. The terminal apparatus 1 may monitor the common control resource set, based on at least the MIB and/or the information on the reception of the PDCCH included in the first system information. The common control resource set may be used for scheduling of the PDSCH including the paging information and/or the information for the change notification of system information.

Step 5102 is a step in which the base station apparatus 3 performs a response to the random access message 1 from the terminal apparatus 1. The response is also referred to as the random access message 2. The random access message 2 may be transmitted via the PDSCH. The PDSCH including the random access message 2 is scheduled by the PDCCH. The CRC bits included in the PDCCH may be scrambled by the RA-RNTI. The random access message 2 may be transmitted with a special uplink grant included therein. The special uplink grant is also referred to as a random access response grant. The special uplink grant may be included in the PDSCH including the random access message 2. The random access response grant may include at least a Temporary C-RNTI.

The base station apparatus 3 can transmit the MIB, the first system information, and/or the second system information, and indicate monitoring of a common control resource set to the terminal apparatus 1. The second system information may include the information on the reception of the PDCCH. The terminal apparatus 1 monitors the common control resource set, based on at least the MIB, and the information on the reception of the PDCCH included in the first system information and/or the second system information. The number of CRC bits added to the PDCCH may be scrambled with Temporary C-RNTI. The common control resource set may be used for scheduling the random access message 2.

The common control resource set may be further given based on at least the physical root index u included in the random access message 1 transmitted from the terminal apparatus 1 and/or a resource (PRACH resource) used for transmission of the random access message 1. The resource may indicate a resource of a time and/or a frequency. The resource may be given by an index of a resource block and/or an index of a slot (subframe). The monitoring of the common control resource set may be triggered by the random access message 1.

Step 5103 is a step in which the terminal apparatus 1 transmits, to the target cell, a request for RRC connection. The request for RRC connection is also referred to as a random access message 3. The random access message 3 may be transmitted via the PUSCH scheduled by the random access response grant. The random access message 3 may include an ID used to identify the terminal apparatus 1. The ID may be an ID managed in a higher layer. The ID may be an SAE Temporary Mobile Subscriber Identity (S-TMSI). The ID may be mapped to the CCCH in the logical channel.

Step 5104 is a step in which the base station apparatus 3 transmits Contention resolution message to the terminal apparatus 1. The contention resolution message is also referred to as the random access message 4. The terminal apparatus 1, after transmitting the random access message 3, monitors the PDCCH that performs scheduling of the PDSCH including the random access message 4. The random access message 4 may include a contention avoidance ID. Here, the contention avoidance ID is used to resolve a contention in which multiple terminal apparatuses 1 transmit signals by using a same radio resource. The contention avoidance ID is also referred to as UE contention resolution identity.

In step 5104, the terminal apparatus 1 which has transmitted the random access message 3 including the ID used for identifying the terminal apparatus 1 (S-TMSI, for example) monitors the random access message 4 including the Contention resolution message. In a case that the contention avoidance ID included in the random access message 4 is identical to the ID used to identify the terminal apparatus 1, the terminal apparatus 1 may consider that the contention resolution has been successfully completed, and set the value of the Temporary C-RNTI in the C-RNTI field. The terminal apparatus 1 having the value of the Temporary C-RNTI set in the C-RNTI field is considered to have completed an RRC connection.

The control resource set to monitor the PDCCH for scheduling of the random access message 4 may be the common control resource set. The base station apparatus 3 can transmit the information on the reception of PDCCH included in the random access message 2 and indicate the monitoring of a common control resource set to the terminal apparatus 1. The terminal apparatus 1 monitors the PDCCH based on at least the information relating to reception of the PDCCH included in the random access message 2.

The terminal apparatus 1 in RRC connection can receive dedicated RRC signaling mapped to the DCCH in the logical channel. The base station apparatus 3 can transmit the dedicated RRC signaling including the information on the reception of the PDCCH and indicate the monitoring of an individual control resource set to the terminal apparatus 1. The terminal apparatus 1 monitors the PDCCH, based on at least the information on the reception of the PDCCH included in the dedicated RRC signaling. The base station apparatus 3 can transmit the dedicated RRC signaling including the information on the reception of the PDCCH and indicate the monitoring of a common control resource set to the terminal apparatus 1. The terminal apparatus 1 performs monitoring of the PDCCH including the CC-RNTI in the common control resource set.

The base station apparatus 3 can transmit the random access message 4 including the information on the reception of the PDCCH reception, and indicate the monitoring of the individual control resource set to the terminal apparatus 1. In a case that the random access message 4 includes the information on the reception of the PDCCH, the terminal apparatus 1 may monitor the individual control resource set, based on at least the information on the reception of the PDCCH.

The common control resource set may be configured in multiple types, not just one type. Depending on the application, each of the multiple common control resource sets may be configured independently. For example, a common control resource set for transmission and/or reception of the PDCCH including the CC-RNTI and a common control resource set for transmission and/or reception of the PDCCH including the SI-RNTI may be configured independently.

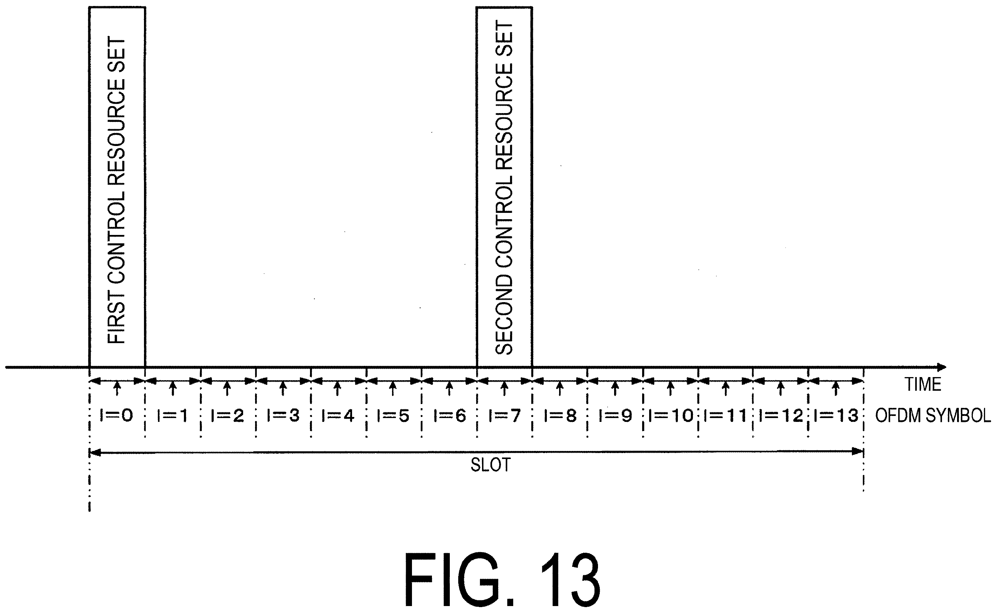

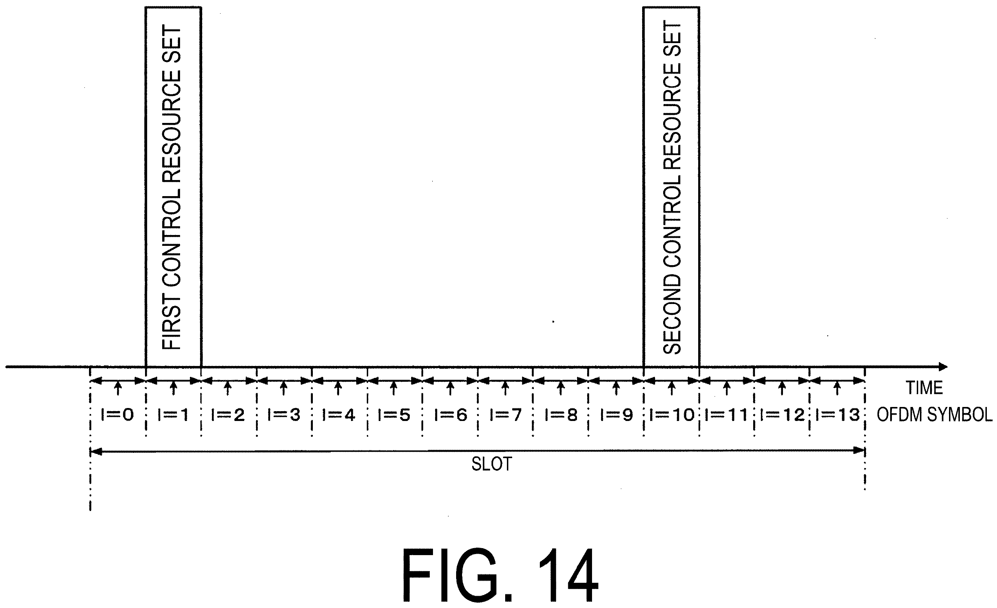

FIG. 13 is a diagram illustrating an example of a first control resource set and a second control resource set configured to the terminal apparatus 1 according to one aspect of the present embodiment. In FIG. 13, 14 OFDM symbols (l = 0, l = 1, l = 2, l = 3, l = 4, l = 5, l = 6, l = 7, l = 8, l = 9, l = 10, l = 11, l = 12, 1 = 13) are configured in one slot. In FIG. 13, the first (l = 0) to the seventh (l = 6) OFDM symbols are OFDM symbols in the first half of the slot, and the eighth (l = 7) to 14th (l = 13) OFDM symbols are OFDM symbols in the first half of the slot. In FIG. 13, the first control resource set includes the first (l = 0) OFDM symbol of the slot and the second control resource set includes the eighth (l = 7) OFDM symbol of the slot.

FIG. 14 is a diagram illustrating an example of a first control resource set and a second control resource set configured to the terminal apparatus 1 according to one aspect of the present embodiment. In FIG. 14, 14 OFDM symbols (l = 0, l = 1, l = 2, l = 3, l = 4, l = 5, l = 6, l = 7, l = 8, l = 9, l = 10, l = 11, l = 12, l = 13) are configured in one slot. In FIG. 14, the first (l = 0) to the seventh (l = 6) OFDM symbols are OFDM symbols in the first half of the slot, and the eighth (l = 7) to 14 (l = 13) OFDM symbols are OFDM symbols in the first half of the slot. In FIG. 14, the first control resource set includes the second (l = 1) OFDM symbol of the slot and the second control resource set includes the 11th (l = 10) OFDM symbol of the slot. The first control resource set may include OFDM symbols other than the first OFDM symbol in the first half of the slot. The second control resource set may include OFDM symbols other than the first OFDM symbol in the latter half of the slot.

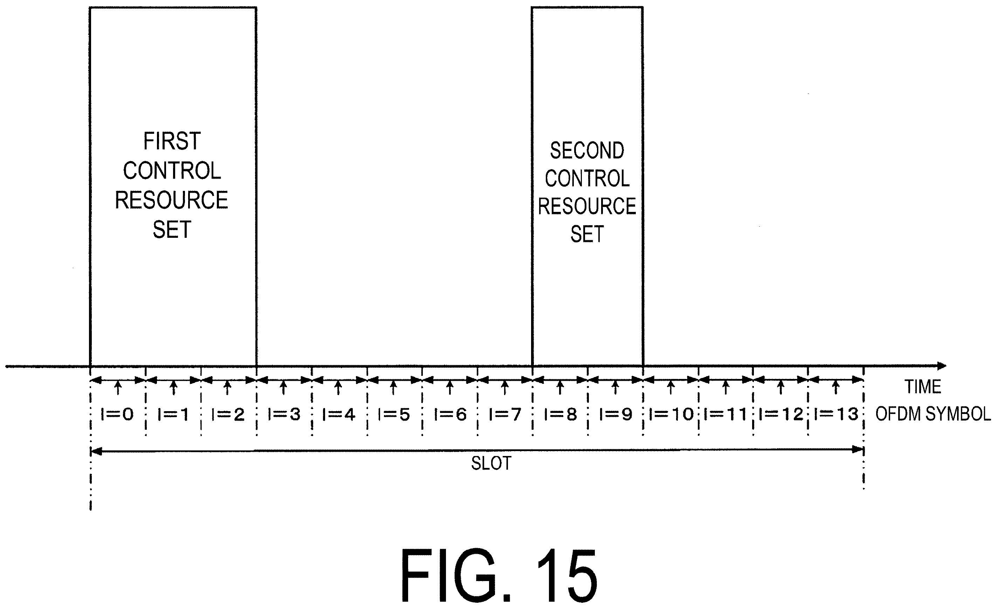

FIG. 15 is a diagram illustrating an example of a first control resource set and a second control resource set configured to the terminal apparatus 1 according to one aspect of the present embodiment. In FIG. 13, 14 OFDM symbols (l = 0, l = 1, l = 2, l = 3, l = 4, l = 5, l = 6, l = 7, l = 8, l = 9, l = 10, l = 11, l = 12, l = 13) are configured in one slot. In FIG. 13, the first (l = 0) to the seventh (l = 6) OFDM symbols are OFDM symbols in the first half of the slot, and the eighth (l = 7) to 14th (l = 13) OFDM symbols are OFDM symbols in the first half of the slot. In FIG. 15, the first control resource set includes the first (l = 0), the second (l = 1), and the third (l = 2) OFDM symbols of the slot and the second control resource set includes the ninth (l = 8) and the 10th (l = 9) OFDM symbols of the slot. The first control resource set may include one or multiple OFDM symbols. The second control resource set may include one or multiple OFDM symbols.

In FIG. 13, FIG. 14, and FIG. 15, multiple OFDM symbols in the slot are divided into half, and OFDM symbols before half in the time domain are OFDM symbols in the first half of the slot, and OFDM symbols behind half in the time domain are OFDM symbols in the latter half of the slot, but the boundary may not be half of the slot. For example, OFDM symbols from the first (l = 0) to ninth (l = 8) (OFDM symbols after half) may be the OFDM symbols in the first half and OFDM symbols from the 10th (l = 9) to 14th (l = 13) may be the OFDM symbols in the latter half.

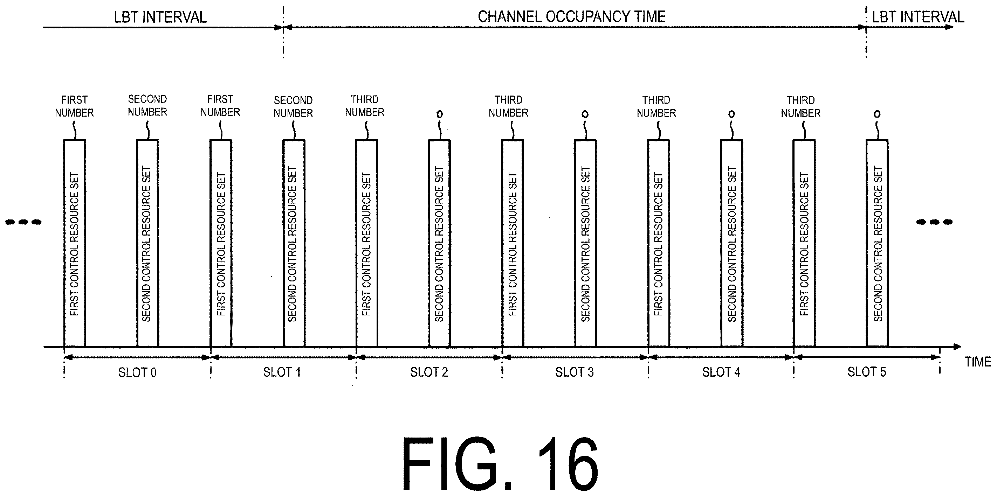

FIG. 16 is a diagram illustrating an example of PDCCH candidates monitored by the terminal apparatus 1 according to one aspect of the present embodiment. In FIG. 16, a slot includes 14 OFDM symbols, the first control resource set includes the first to second OFDM symbols, and the second control resource set includes eighth to ninth OFDM symbols. Until the seventh OFDM symbol interval of the slot 1 is the LBT interval, and the base station apparatus 3 does not transmit a signal. After LBT in the base station apparatus 3, the base station apparatus 3 starts a signal from the eighth OFDM symbol of the slot 1, and the base station apparatus 3 occupies the channel until the seventh OFDM symbol of the slot 5 (4 ms) (Channel Occupancy Time).

In the slot 0, which is during the LBT interval, the terminal apparatus 1 monitors the first number of PDCCH candidates in the search space of the first control resource set, and monitors the second number of PDCCH candidates in the search space of the second control resource set. In a part of the slot 1 of the LBT interval, the terminal apparatus 1 monitors the first number of PDCCH candidates in the search space of the first control resource set, and monitors the second number of PDCCH candidates in the search space of the second control resource set. The base station apparatus 3 transmits the PDCCH to the terminal apparatus 1 by using the PDCCH candidates of the second control resource set of the slot 1. The terminal apparatus 1 detects the PDCCH in the search space of the second control resource set of the slot 1. The monitoring of the PDCCH until the slot 1 in the terminal apparatus 1 is performed in a state in which the terminal apparatus 1 does not determine (prior to determining) that the base station apparatus 3 is transmitting a signal.

The terminal apparatus 1 monitors the third number of PDCCH candidates in the search space of the first control resource set in the slot 2 after determining that the base station apparatus 3 is transmitting a signal. In the slot 2, the number of PDCCH candidates in the search space of the second control resource set is zero. In the slot 2, the terminal apparatus 1 does not configure the search space for the PDCCH in the second control resource set. Similarly, the terminal apparatus 1 monitors the third number of PDCCH candidates in the search space of the first control resource set in the slot 3, and does not monitor the PDCCH candidates in the second control resource set. Similarly, the terminal apparatus 1 monitors the third number of PDCCH candidates in the search space of the first control resource set in the slot 4, and does not monitor the PDCCH candidates in the second control resource set. Similarly, the terminal apparatus 1 monitors the third number of PDCCH candidates in the search space of the first control resource set in the slot 5, and does not monitor the PDCCH candidates in the second control resource set.

In the slots after the slot 5, the LBT interval is resumed, and the terminal apparatus 1 monitors the first number of PDCCH candidates in the search space of the first control resource set until it is determined that the base station apparatus 3 is transmitting a signal, and monitors the second number of PDCCH candidates in the search space in the second control resource set.

In FIG. 16, the third number is greater than the first number (the third number is different from the first number). The sum of the first number and the second number may be equal to the third number. In the description of FIG. 16, a case has been described in which, after it is determined that the base station apparatus 3 is transmitting a signal, the terminal apparatus 1 does not monitor the PDCCH candidates in the second control resource set, but the terminal apparatus 1 may monitor the fourth number of PDCCH candidates in the search space of the second control resource set. In this case, the third number is greater than the first number and the fourth number is less than the second number.

In FIG. 16, a case has been described in which an interval (Channel Occupancy Time) in which the channel is continuously occupied is 4 ms, but the channel occupancy time may have a different value. The channel occupancy time may be predetermined by the country or may be predetermined for each frequency band. The base station apparatus 3 may notify the terminal apparatus 1 of the channel occupancy time. The terminal apparatus 1 identifies the length of the channel occupancy time, and it is possible to identify the timing when the channel occupancy time ends.

In the description of FIG. 16, a case has been described in which the terminal apparatus 1 determines that the base station apparatus 3 is transmitting a signal by detecting the PDCCH, but different signals may be used in combination. A Wake up signal may be used separately, and the terminal apparatus 1 may determine that the base station apparatus 3 is transmitting a signal in a case that the Wake up signal is detected. The Wake up signal may be a PDCCH transmitted and/or received in a common control resource set, may have the same signal configuration as the synchronization signal, or may have the same signal configuration as the reference signal.

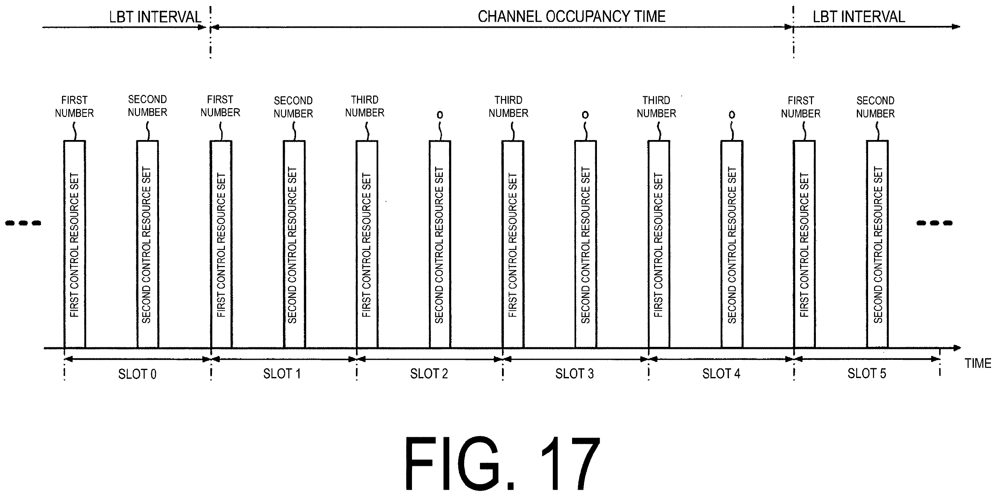

FIG. 17 is a diagram illustrating an example of PDCCH candidates monitored by the terminal apparatus 1 according to one aspect of the present embodiment. In FIG. 17, a slot includes 14 OFDM symbols, the first control resource set includes the first to second OFDM symbols, and the second control resource set includes eighth to ninth OFDM symbols. Until the 14th OFDM symbol interval of the slot 0 is the LBT interval, and the base station apparatus 3 does not transmit a signal. After LBT in the base station apparatus 3, the base station apparatus 3 starts a signal from the first OFDM symbol of the slot 1, and the base station apparatus 3 occupies the channel until the 14th OFDM symbol of the slot 4 (4 ms) (Channel Occupancy Time).

In the slot 0, which is during the LBT interval, the terminal apparatus 1 monitors the first number of PDCCH candidates in the search space of the first control resource set, and monitors the second number of PDCCH candidates in the search space of the second control resource set. The terminal apparatus 1 that has not yet detected a signal from the base station apparatus 3 monitors the first number of PDCCH candidates in the search space of the first control resource set, and monitors the second number of PDCCH candidates in the search space of the second control resource set, in the slot 1. The base station apparatus 3 transmits the PDCCH to the terminal apparatus 1 by using the PDCCH candidates of the first control resource set of the slot 1. The terminal apparatus 1 detects the PDCCH in the search space of the first control resource set of the slot 1. The monitoring of the PDCCH until the slot 1 in the terminal apparatus 1 is performed in a state in which the terminal apparatus 1 does not determine (prior to determining) that the base station apparatus 3 is transmitting a signal.

The terminal apparatus 1 monitors the third number of PDCCH candidates in the search space of the first control resource set in the slot 2 after determining that the base station apparatus 3 is transmitting a signal. In the slot 2, the number of PDCCH candidates in the search space of the second control resource set is zero. In the slot 2, the terminal apparatus 1 does not configure the search space for the PDCCH in the second control resource set. Similarly, the terminal apparatus 1 monitors the third number of PDCCH candidates in the search space of the first control resource set in the slot 3, and does not monitor the PDCCH candidates in the second control resource set. Similarly, the terminal apparatus 1 monitors the third number of PDCCH candidates in the search space of the first control resource set in the slot 4, and does not monitor the PDCCH candidates in the second control resource set.

In a slot (such as slot 5) after the slot 4, the LBT interval is resumed, and the terminal apparatus 1 monitors the first number of PDCCH candidates in the search space of the first control resource set, and monitors the second number of PDCCH candidates in the search space of the second control resource set, until it is determined that the base station apparatus 3 is transmitting a signal.

As described above, in one embodiment of the present invention, the terminal apparatus 1 receives a PDCCH in a slot from a base station apparatus 3; configures a first control resource set and a second control resource set, based on RRC signaling; monitors PDCCH candidates in the first control resource set and the second control resource set; and includes a decoding unit configured to decode the PDCCH candidates, wherein the first control resource set includes OFDM symbols in a first half of the slot, the second control resource set includes OFDM symbols in a latter half of the slot, a first number of the PDCCH candidates are monitored in the first control resource set and a second number of the PDCCH candidates are monitored in the second control resource set in the slot until it is determined that the base station apparatus 3 is transmitting a signal, and a third number of the PDCCH candidates are monitored in the first control resource set in the slot after it is determined that the base station apparatus 3 is transmitting a signal. The third number is greater than the first number. The sum of the first number and the second number is equal to the third number.

As described above, in one embodiment of the present invention, a base station apparatus 3 transmits a PDCCH in a slot; configures a first control resource set and a second control resource set for a terminal apparatus 1; and transmits the PDCCH by using PDCCH candidates in the first control resource set or the second control resource set in the slot, wherein a first number of the PDCCH candidates are configured to the first control resource set for a slot in which transmission of a signal is first started to the terminal apparatus 1 after Listen-Before-Talk, a second number of the PDCCH candidates are configured to the second control resource set for a slot in which transmission of a signal is first started for the terminal apparatus 1 after Listen-Before-Talk, and a third number of the PDCCH candidates are configured in the first control resource set for subsequent slots of a slot in which transmission of a signal is first started for the terminal apparatus 1 after Listen-Before-Talk. The third number is greater than the first number. The sum of the first number and the second number is equal to the third number.

As described above, in one aspect of the present invention, resources can be efficiently used and efficient communication can be achieved. In a case that the timing at which the transmission of a signal is enabled by the base station apparatus 3 does not match the boundary of the slot after LBT, the base station apparatus 3 can allocate the PDSCH by transmitting the PDCCH to the terminal apparatus 1 by using the PDCCH candidates of a control resource set of any one of the first control resource set including the OFDM symbols in the first half of the slot or the second control resource set including the OFDM symbols in the latter half of the slot. In other words, the base station apparatus 3 can transmit the PDCCH to the terminal apparatus 1 by using the PDCCH candidates of a control resource set close to the timing (timing when a signal can be transmitted after LBT), so the waiting time for scheduling can be shortened, and it is possible to prevent a reduction in utilization efficiency of resources (channels, frequencies) in unlicensed frequency bands. The terminal apparatus 1 can receive data by using a number of resources, and the transmission speed can be improved. On the other hand, since the PDSCH can be scheduled by the OFDM symbols in the first half of the slot after LBT, by reducing the number of PDCCH candidates in the search space in the second control resource set including the OFDM symbols in the latter half of the slot, and by increasing the number of PDCCH candidates in the first control resource set including the OFDM symbols in the first half of the slot, the scheduling flexibility for allocating the PDCCH can be increased without increasing the load of blind decoding (PDCCH decoding processing) in the slot of the terminal apparatus 1. In a case that the number of PDCCH candidates in the search space is small, there is a high probability that a phenomenon called blocking occurs in which resources (control channel elements) constituting the PDCCH candidate collides between the terminal apparatuses 1, but in a case that the number of PDCCH candidates in the search space is large, the probability of blocking of the PDCCH candidates can be suppressed, and assigning the PDCCH to the terminal apparatus 1 can be made flexible.

A program running on the base station apparatus 3 and the terminal apparatus 1 according to one aspect of the present invention may be a program that controls a Central Processing Unit (CPU) and the like, such that the program causes a computer to operate in such a manner as to realize the functions of the above-described embodiment according to one aspect of the present invention. The information handled in these devices is temporarily stored in a Random Access Memory (RAM) while being processed. Thereafter, the information is stored in various types of Read Only Memory (ROM) such as a Flash ROM and a Hard Disk Drive (HDD), and when necessary, is read by the CPU to be modified or rewritten.

Note that the terminal apparatus 1 and the base station apparatus 3 according to the above-described embodiment may be partially achieved by a computer. In that case, this configuration may be realized by recording a program for realizing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as a peripheral apparatus. A "computer-readable recording medium" refers to a portable medium such as a flexible disk, a magneto-optical disk, a ROM, a CD-ROM, and the like, and a storage device such as a hard disk built into the computer system.

The "computer-readable recording medium" may include a medium that dynamically retains a program for a short period of time, such as a communication line in a case that the program is transmitted over a network such as the Internet or over a communication line such as a telephone line, and may also include a medium that retains the program for a fixed period of time, such as a volatile memory included in the computer system functioning as a server or a client in such a case. The above-described program may be one for realizing some of the above-described functions, and also may be one capable of realizing the above-described functions in combination with a program already recorded in a computer system.

The base station apparatus 3 according to the above-described embodiment may be achieved as an aggregation (apparatus group) including multiple apparatuses. Each of the apparatuses constituting such an apparatus group may include some or all portions of each function or each functional block of the base station apparatus 3 according to the above-described embodiment. The apparatus group is required to have a complete set of functions or functional blocks of the base station apparatus 3. The terminal apparatus 1 according to the above-described embodiment can also communicate with the base station apparatus as the aggregation.

The base station apparatus 3 according to the above-described embodiment may serve as an Evolved Universal Terrestrial Radio Access Network (EUTRAN). The base station apparatus 3 according to the above-described embodiment may have some or all of the functions of a node higher than an eNodeB.

Some or all portions of each of the terminal apparatus 1 and the base station apparatus 3 according to the above-described embodiment may be typically achieved as an LSI which is an integrated circuit or may be achieved as a chip set. The functional blocks of each of the terminal apparatus 1 and the base station apparatus 3 may be individually achieved as a chip, or some or all of the functional blocks may be integrated into a chip. A circuit integration technique is not limited to the LSI, and may be realized with a dedicated circuit or a general-purpose processor. In a case that with advances in semiconductor technology, a circuit integration technology with which an LSI is replaced appears, it is also possible to use an integrated circuit based on the technology.

According to the above-described embodiment, the terminal apparatus has been described as an example of a communication apparatus, but the present invention is not limited to such a terminal apparatus, and is applicable to a terminal apparatus or a communication apparatus of a fixed-type or a stationary-type electronic apparatus installed indoors or outdoors, for example, such as an Audio-Video (AV) apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the claimed subject-matter. Various modifications are possible within the claimed subject-matter, and embodiments that are made by suitably combining technical means disclosed according to the different embodiments are also included. A configuration in which constituent elements, described in the respective embodiments and having mutually the same effects, are substituted for one another is also included.

## Claims

1. A user equipment, UE (1), comprising:
a radio resource control, RRC, layer processing unit (16) configured and/or programmed to set one or more control resource sets, CORESETs, based on RRC signaling; and
a reception unit (10) configured and/or programmed to monitor one or more physical downlink control channel, PDCCH, candidates in each of a search space corresponding to each of the one or more CORESETs; wherein
in a case that the UE (1) does not determine that a base station device occupies a channel and the UE (1) detects a PDCCH in a first search space among the each of the search spaces, the UE (1) determines that the base station device occupies that channel and the UE (1) stops monitoring one or more PDCCH candidates in the first search space among the each of the search spaces, and monitors one or more PDCCH candidates in a second search space among the each of the search spaces.

2. A communication method performed by a user equipment, UE (1), the communication method comprising:
setting one or more control resource sets, CORESETs, based on radio resource control, RRC, signaling;
monitoring one or more physical downlink control channel, PDCCH, candidates in each of a search space corresponding to each of the one or more CORESETs, wherein
in a case that the UE (1) does not determine that a base station device occupies a channel and the UE (1) detects a PDCCH in a first search space among the each of the search spaces, the UE (1) determines that the base station device occupies the channel and the UE (1) stops monitoring one ore more PDCCH candidates in the first search space among the each of the search spaces, and monitors one or more PDCCH candidates in a second search space among the each of the search spaces.

## Patentansprüche

1. Nutzerendgerät, UE (1), aufweisend:
eine Schichtverarbeitungseinheit (16) einer Funkressourcensteuerung, RRC, die so konfiguriert und/oder programmiert ist, dass sie basierend auf einer RRC-Signalisierung einen oder mehrere Steuerungsressourcensätze, CORESETs, festlegt; und
eine Empfangseinheit (10), die so konfiguriert und/oder programmiert ist, dass sie einen oder mehrere Kandidaten für einen physikalischen Downlink-Steuerkanal, PDCCH, in jedem eines Suchraums entsprechend jedem der ein oder mehr CORESETs überwacht, wobei
in einem Fall, in dem das UE (1) nicht bestimmt, dass eine Basisstationsvorrichtung einen Kanal belegt, und das UE (1) einen PDCCH in einem ersten Suchraum unter den einzelnen Suchräumen detektiert, das UE (1) bestimmt, dass die Basisstationsvorrichtung diesen Kanal belegt, und das UE (1) ein Überwachen von einem oder mehreren PDCCH-Kandidaten in dem ersten Suchraum unter den einzelnen Suchräumen stoppt und einen oder mehrere PDCCH-Kandidaten in einem zweiten Suchraum unter den einzelnen Suchräumen überwacht.

2. Kommunikationsverfahren, das von einem Nutzerendgerät, UE (1), durchgeführt wird, wobei das Kommunikationsverfahren aufweist:
Festlegen eines oder mehrerer Steuerungsressourcensätze, CORESETs, basierend auf einer RRC-Signalisierung;
Überwachen eines oder mehrerer Kandidaten für einen physikalischen Downlink-Steuerkanal, PDCCH, in jedem eines Suchraums entsprechend jedem der ein oder mehr CORESETs, wobei
in einem Fall, in dem das UE (1) nicht bestimmt, dass eine Basisstationsvorrichtung einen Kanal belegt, und das UE (1) einen PDCCH in einem ersten Suchraum unter den einzelnen Suchräumen detektiert, das UE (1) bestimmt, dass die Basisstationsvorrichtung diesen Kanal belegt, und das UE (1) ein Überwachen von einem oder mehreren PDCCH-Kandidaten in dem ersten Suchraum unter den einzelnen Suchräumen stoppt und einen oder mehrere PDCCH-Kandidaten in einem zweiten Suchraum unter den einzelnen Suchräumen überwacht.

## Revendications

1. Équipement utilisateur, UE (1), comprenant :
une unité de traitement de couche de commande de ressources radio, RRC, (16) configurée et/ou programmée pour définir un ou plusieurs ensembles de ressources de commande, CORESET, sur la base d'une signalisation RRC ; et
une unité de réception (10) configurée et/ou programmée pour surveiller un ou plusieurs candidats de canal physique de commande de liaison descendante, PDCCH, dans chacun d'un espace de recherche correspondant à chacun des un ou plusieurs CORESET ; dans lequel
dans un cas où l'UE (1) ne détermine pas qu'un dispositif de station de base occupe un canal et l'UE (1) détecte un PDCCH dans un premier espace de recherche parmi chacun des espaces de recherche, l'UE (1) détermine que le dispositif de station de base occupe ce canal et l'UE (1) arrête de surveiller un ou plusieurs candidats PDCCH dans le premier espace de recherche parmi chacun des espaces de recherche, et surveille un ou plusieurs candidats PDCCH dans un second espace de recherche parmi chacun des espaces de recherche.

2. Procédé de communication réalisé par
un équipement utilisateur, UE (1), le procédé de communication comprenant :
la définition d'un ou plusieurs ensembles de ressources de commande, CORESET, sur la base d'une signalisation de commande de ressources radio, RRC ;
la surveillance d'un ou plusieurs candidats de canal physique de commande de liaison descendante, PDCCH, dans chacun d'un espace de recherche correspondant à chacun des un ou plusieurs CORESET, dans lequel
dans un cas où l'UE (1) ne détermine pas qu'un dispositif de station de base occupe un canal et l'UE (1) détecte un PDCCH dans un premier espace de recherche parmi chacun des espaces de recherche, l'UE (1) détermine que le dispositif de station de base occupe le canal et l'UE (1) arrête de surveiller un ou plusieurs candidats PDCCH dans le premier espace de recherche parmi chacun des espaces de recherche, et surveille un ou plusieurs candidats PDCCH dans un second espace de recherche parmi chacun des espaces de recherche.
